# EUROPEAN PATENT APPLICATION

(11) **EP 4 192 144 A1**
(43) Date of publication of application: **07.06.2023**
(21) Application number: 20947028.5
(22) Date of filing: 30.07.2020
(51) Int. Cl.: H04W 72/02, H04W 92/18, H04W 28/04

(54) **TERMINAL, AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2020/029358
(87) International publication number: WO 2022/024330

(57) **Abstract**

A terminal includes: a control unit that selects a resource, based on a timing at which another terminal can perform reception in a resource selection window in a resource pool; and a transmitting unit that transmits data to the another terminal in the selected resource. The control unit selects at least a resource for retransmission related to a HARQ (Hybrid automatic repeat request) feedback transmitted from the another terminal.

## Description

### TECHNICAL FIELD

The present invention relates to a terminal and a communication method in a radio communication system.

### BACKGROUND ART

In long term evolution (LTE) and the successor system of LTE (for example, LTE advanced (LTE-A) and new radio (NR) (also referred to as 5G)), a device to device (D2D) technology has been discussed in which terminals perform direct communication with each other without using a base station (for example, Non-Patent Document 1).

D2D reduces traffic between the terminal and the base station, and enables communication between the terminals even when the base station is in a state where communication is not available during a disaster. Note that, in a 3rd generation partnership project (3GPP), D2D is referred to as a "sidelink", but herein, the more general term D2D is used. Here, in the description of the following embodiment, the sidelink is also used as necessary.

The D2D communication is classified broadly into D2D discovery for discovering other terminals that are capable of performing communication and D2D communication for performing direct communication between terminals (also referred to as D2D direct communication, terminal-to-terminal direct communication, and the like). Hereinafter, when the D2D communication, the D2D discovery, and the like are not particularly distinguished from each other, the D2D communication, the D2D discovery, and the like will be simply referred to as D2D. In addition, a signal to be transmitted and received in D2D will be referred to as a D2D signal. Various use cases of a service according to vehicle to everything (V2X) in NR have been discussed (for example, Non-Patent Document 2).

### CITATION LIST

### NON-PATENT DOCUMENT

Non-Patent Document 1: 3GPP TS 38.211 V16.2.0 (2020-06)
Non-Patent Document 2: 3GPP TR 22.886 V15.1.0 (2017-03)

### SUMMARY OF THE INVENTION

### PROBLEM TO BE SOLVED BY THE INVENTION

Power saving has been discussed as the enhancement of an NR sidelink. For example, in a resource allocation mode 2 where a terminal autonomously selects a resource, there is partial sensing as a power saving operation in which sensing is performed by the terminal with respect to limited resources in a sensing window. Available resource candidates are selected from a resource selection window, based on results of the partial sensing.

Here, in the NR sidelink, a terminal (Power saving UE) that performs a power saving operation transmits and receives data only at a specific timing. On the other hand, in order to perform retransmission by HARQ (Hybrid automatic repeat request) feedback, transmission and reception of initial transmission data and retransmission data and transmission and reception of HARQ feedback are required. For this reason, depending on the timing, it is expected that the terminal performing the power saving operation cannot process the retransmission by HARQ feedback.

Here, in the NR sidelink, a terminal (Power saving UE) that performs a power saving operation transmits and receives data only at a specific timing. On the other hand, in order to perform retransmission by HARQ (Hybrid automatic repeat request) feedback, transmission and reception of initial transmission data and retransmission data and transmission and reception of HARQ feedback are required. For this reason, depending on the timing, it is expected that the terminal performing the power saving operation cannot process the retransmission by HARQ feedback.

The present invention has been made in view of the above points, and it is an object of the present invention to perform an operation related to a HARQ (Hybrid automatic repeat request) suitable for a power saving operation in terminal-to-terminal direct communication.

### MEANS FOR SOLVING PROBLEM

According to the disclosed technique, there is provided a terminal including: a control unit that selects a resource, based on a timing at which another terminal can perform reception in a resource selection window in a resource pool; and a transmitting unit that transmits data to the another terminal in the selected resource. The control unit selects at least a resource for retransmission related to a HARQ (Hybrid automatic repeat request) feedback transmitted from the another terminal.

### EFFECT OF THE INVENTION

According to the disclosed technique, it is possible to perform an operation related to the HARQ (Hybrid automatic repeat request) suitable for the power saving operation.

### BRIEF DESCRIPTION OF DRAWINGS

[Fig. 1] Fig. 1 is a diagram illustrating V2X;
[Fig. 2] Fig. 2 is a diagram illustrating Example (1) of a transmission mode of V2X;
[Fig. 3] Fig. 3 is a diagram illustrating Example (2) of the transmission mode of V2X;
[Fig. 4] Fig. 4 is a diagram illustrating Example (3) of the transmission mode of V2X;
[Fig. 5] Fig. 5 is a diagram illustrating Example (4) of the transmission mode of V2X;
[Fig. 6] Fig. 6 is a diagram illustrating Example (5) of the transmission mode of V2X;
[Fig. 7] Fig. 7 is a diagram illustrating Example (1) of a communication type of V2X;
[Fig. 8] Fig. 8 is a diagram illustrating Example (2) of the communication type of V2X;
[Fig. 9] Fig. 9 is a diagram illustrating Example (3) of the communication type of V2X;
[Fig. 10] Fig. 10 is a sequence diagram illustrating Operation Example (1) of V2X;
[Fig. 11] Fig. 11 is a sequence diagram illustrating Operation Example (2) of V2X;
[Fig. 12] Fig. 12 is a sequence diagram illustrating Operation Example (3) of V2X;
[Fig. 13] Fig. 13 is a sequence diagram illustrating Operation Example (4) of V2X;
[Fig. 14] Fig. 14 is a diagram illustrating an example of a sensing operation;
[Fig. 15] Fig. 15 is a diagram illustrating an example of a partial sensing operation;
[Fig. 16] Fig. 16 is a diagram illustrating an example (1) of a transmission and reception operation;
[Fig. 17] Fig. 17 is a diagram illustrating an example (2) of the transmission and reception operation;
[Fig. 18] Fig. 18 is a diagram illustrating an example (1) of a transmission and reception operation in an embodiment of the invention;
[Fig. 19] Fig. 19 is a diagram illustrating an example (2) of the transmission and reception operation in the embodiment of the invention;
[Fig. 20] Fig. 20 is a diagram illustrating an example (3) of the transmission and reception operation in the embodiment of the invention;
[Fig. 21] Fig. 21 is a diagram illustrating an example (4) of the transmission and reception operation in the embodiment of the invention;
[Fig. 22] Fig. 22 is a diagram illustrating an example (5) of the transmission and reception operation in the embodiment of the invention;
[Fig. 23] Fig. 23 is a diagram illustrating an example (6) of the transmission and reception operation in the embodiment of the invention;
[Fig. 24] Fig. 24 is a diagram illustrating an example of the functional configuration of a base station 10 in the embodiment of the invention;
[Fig. 25] Fig. 25 is a diagram illustrating an example of the functional configuration of a terminal 20 in the embodiment of the invention; and
[Fig. 26] Fig. 26 is a diagram illustrating an example of the hardware configuration of the base station 10 or the terminal 20 in the embodiment of the invention.

### MODE(S) FOR CARRYING OUT THE INVENTION

Hereinafter, an embodiment of the invention will be described with reference to the drawings. Note that, the embodiment described below is an example, and an embodiment to which the invention is applied is not limited to the following embodiment.

In the operation of a radio communication system of the embodiment of the invention, the conventional technology is suitably used. However, the conventional technology, for example, is the conventional LTE, but is not limited to the conventional LTE. In addition, the term "LTE" used herein has a broad meaning including LTE-advanced and a scheme subsequent to the LTE-advanced (for example, NR), or a wireless local area network (LAN), unless otherwise noted.

In addition, in the embodiment of the invention, a duplex may be a time division duplex (TDD), may be a frequency division duplex (FDD), or may be other schemes (for example, a flexible duplex or the like).

In addition, in the embodiment of the invention, "configuring" a radio parameter or the like may mean pre-configuring a predetermined value, or may be configuring a radio parameter that is indicated by a base station 10 or a terminal 20.

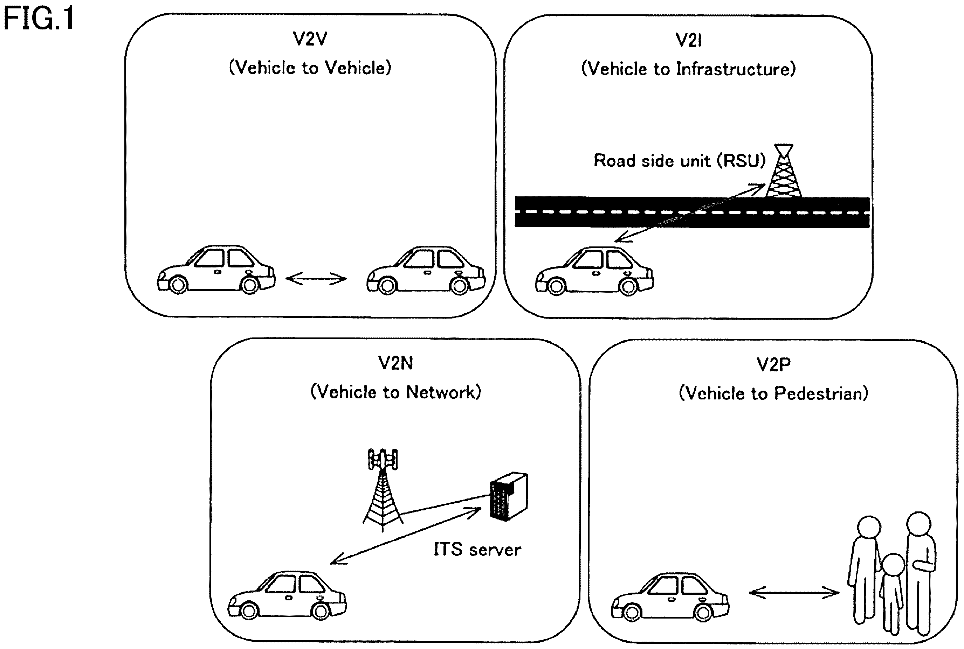

Fig. 1 is a diagram illustrating V2X. In 3GPP, it is discussed to implement vehicle to everything (V2X) or enhanced V2X (eV2X) by extending a D2D function, and the development of specifications thereof has progressed. As illustrated in Fig. 1, V2X is a part of intelligent transport systems (ITS), and is a generic term for: vehicle to vehicle (V2V) indicating a communication mode that is performed between vehicles; vehicle to infrastructure (V2I) indicating a communication mode that is performed between a vehicle and a road-side unit (RSU) to be provided on a roadside; vehicle to network (V2N) indicating a communication mode that is performed between a vehicle and an ITS server; and vehicle to pedestrian (V2P) indicating a communication mode that is performed between a vehicle and a mobile terminal carried by a pedestrian.

In addition, in 3GPP, V2X using cellular communication and terminal-to-terminal communication of LTE or NR have been discussed. V2X using the cellular communication is also referred to as cellular V2X. In V2X of NR, it has been discussed to achieve high capacity, low latency, high reliability, and quality of service (QoS) control.

Regarding V2X of LTE or NR, it is expected that discussions not limited to the 3GPP specification development will be held in the future. For example, it is expected that discussions will be held regarding: ensuring interoperability; reducing cost by implementing higher layers; a method for using together or switching a plurality of radio access technologies (RAT); regulation support in each country; data acquisition and delivering of a V2X platform of LTE or NR; and database management and a use method thereof.

In the embodiment of the invention, it is mainly expected that a communication unit is mounted on a vehicle, but the embodiment of the invention is not limited thereto. For example, the communication unit may be a terminal that is carried by a person, the communication unit may be a device that is mounted on a drone or an air craft, or the communication unit may be a base station, RSU, a relay station (relay node), a terminal having scheduling capability, and the like.

Note that, a sidelink (SL) may be distinguished from an uplink (UL) or a downlink (DL), based on one of the following 1) to 4) or a combination thereof. In addition, SL may be referred to as another name.
1) Resource arrangement in the time domain
2) Resource arrangement in the frequency domain
3) A synchronization signal to be referred to (including sidelink synchronization signal (SLSS))
4) A reference signal to be used in path-loss measurement for transmission power control

In addition, regarding orthogonal frequency division multiplexing (OFDM) of SL or UL, any of cyclic-prefix OFDM (CP-OFDM), Discrete Fourier Transform-Spread-OFDM (DFT-S-OFDM), OFDM without transform precoding, and OFDM with transform precoding may be applied.

In SL of LTE, regarding resource allocation of SL with respect to the terminal 20, Mode 3 and Mode 4 are defined. In Mode 3, a transmission resource is more dynamically allocated by downlink control information (DCI) that is transmitted from the base station 10 to the terminal 20. In addition, in Mode 3, semi persistent scheduling (SPS) can be performed. In Mode 4, the terminal 20 autonomously selects the transmission resource from a resource pool.

Note that, a slot in the embodiment of the invention may be replaced with a symbol, a mini slot, a subframe, a radio frame, and a transmission time interval (TTI). In addition, a cell in the embodiment of the invention may be replaced with a cell group, a carrier component, BWP, a resource pool, a resource, a radio access technology (RAT), a system (including a radio LAN), and the like.

Note that, in the embodiment of the invention, the terminal 20 is not limited to a V2X terminal, and may be all types of terminals that perform D2D communication. For example, the terminal 20 may be a terminal that is carried by a user, such as a smart phone, or may be an internet of things (IoT) device such as a smart meter.

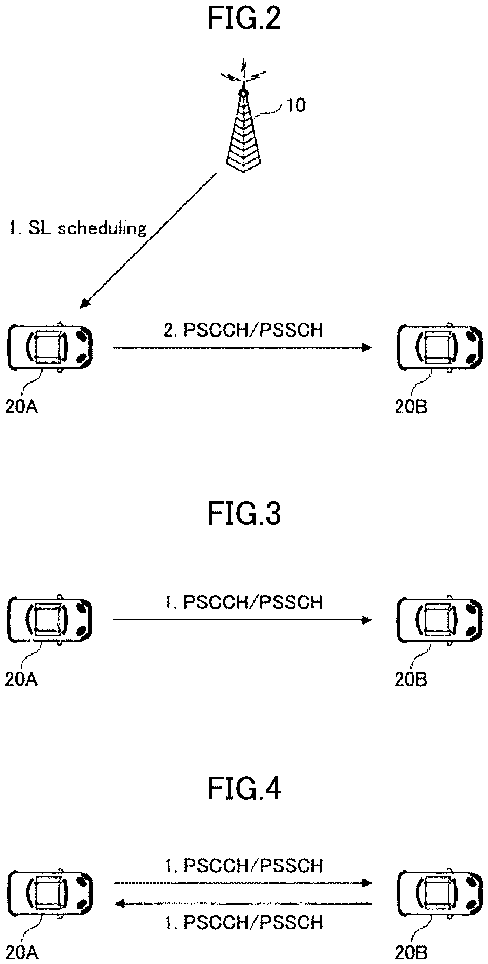

Fig. 2 is a diagram illustrating Example (1) of a transmission mode of V2X. In the transmission mode of the sidelink communication illustrated in Fig. 2, in Step 1, the base station 10 transmits sidelink scheduling to a terminal 20A. Subsequently, the terminal 20A transmits a physical sidelink control channel (PSCCH) and a physical sidelink shared channel (PSSCH) to a terminal 20B, based on the received scheduling (Step 2). The transmission mode of the sidelink communication illustrated in Fig. 2 may be referred to as a sidelink transmission mode 3 in LTE. In the sidelink transmission mode 3 in LTE, Uu based sidelink scheduling is performed. Uu is a radio interface between a universal terrestrial radio access network (UTRAN) and a user equipment (UE). Note that, the transmission mode of the sidelink communication illustrated in Fig. 2 may be referred to as a sidelink transmission mode 1 in NR.

Fig. 3 is a diagram illustrating Example (2) of the transmission mode of V2X. In the transmission mode of the sidelink communication illustrated in Fig. 3, in Step 1, the terminal 20A transmits PSCCH and PSSCH to the terminal 20B by using the autonomously selected resource. The transmission mode of the sidelink communication illustrated in Fig. 3 may be referred to as a sidelink transmission mode 4 in LTE. In the sidelink transmission mode 4 in LTE, the UE itself executes resource selection.

Fig. 4 is a diagram illustrating Example (3) of the transmission mode of V2X. In the transmission mode of the sidelink communication illustrated in Fig. 4, in Step 1, the terminal 20A transmits PSCCH and PSSCH to the terminal 20B by using the autonomously selected resource. Similarly, the terminal 20B transmits PSCCH and PSSCH to the terminal 20A by using the autonomously selected resource (Step 1). The transmission mode of the sidelink communication illustrated in Fig. 4 may be referred to as a sidelink transmission mode 2a in NR. In the sidelink transmission mode 2 in NR, the terminal 20 itself executes the resource selection.

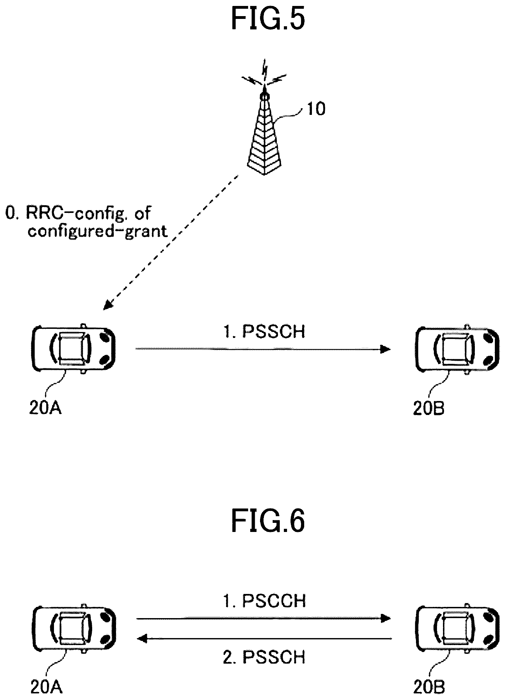

Fig. 5 is a diagram illustrating Example (4) of the transmission mode of V2X. In the transmission mode of the sidelink communication illustrated in Fig. 5, in Step 0, the base station 10 transmits the grant of the sidelink to the terminal 20A through radio resource control (RRC) configuration. Subsequently, the terminal 20A transmits PSSCH to the terminal 20B, based on the received resource pattern (Step 1). The transmission mode of the sidelink communication illustrated in Fig. 5 may be referred to as a sidelink transmission mode 2c in NR.

Fig. 6 is a diagram illustrating Example (5) of the transmission mode of V2X. In the transmission mode of the sidelink communication illustrated in Fig. 6, in Step 1, the terminal 20A transmits the sidelink scheduling to the terminal 20B through PSCCH. Subsequently, the terminal 20B transmits the PSSCH to the terminal 20A, based on the received scheduling (Step 2). The transmission mode of the sidelink communication illustrated in Fig. 6 may be referred to as a sidelink transmission mode 2d in NR.

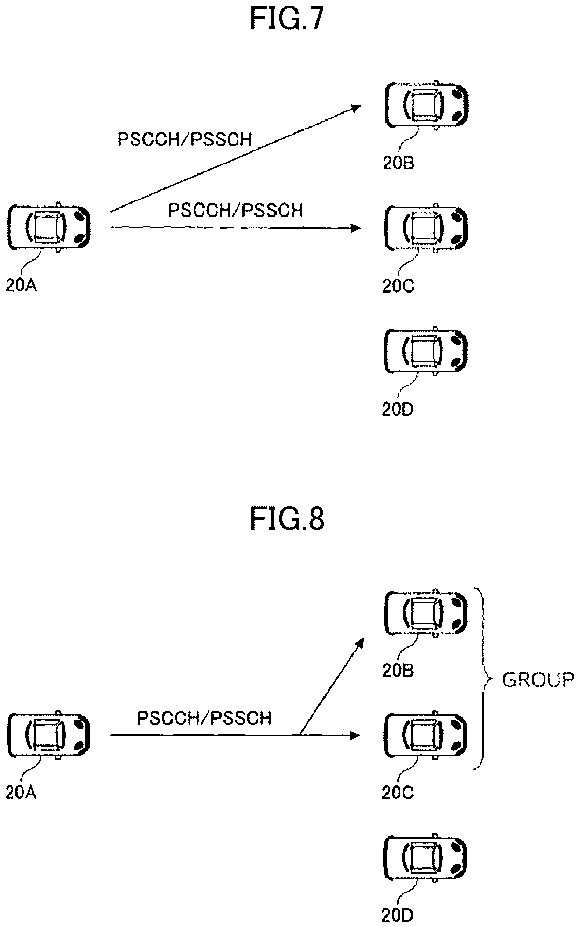

Fig. 7 is a diagram illustrating Example (1) of a communication type of V2X. The communication type of the sidelink illustrated in Fig. 7 is unicast. The terminal 20A transmits PSCCH and PSSCH to the terminal 20. In the example illustrated in Fig. 7, the terminal 20A performs unicast with respect to the terminal 20B, and performs unicast with respect to a terminal 20C.

Fig. 8 is a diagram illustrating Example (2) of the communication type of V2X. The communication type of the sidelink illustrated in Fig. 8 is groupcast. The terminal 20A transmits PSCCH and PSSCH to a group to which one or a plurality of terminals 20 belong. In the example illustrated in Fig. 8, the group includes the terminal 20B and the terminal 20C, and the terminal 20A performs groupcast with respect to the group.

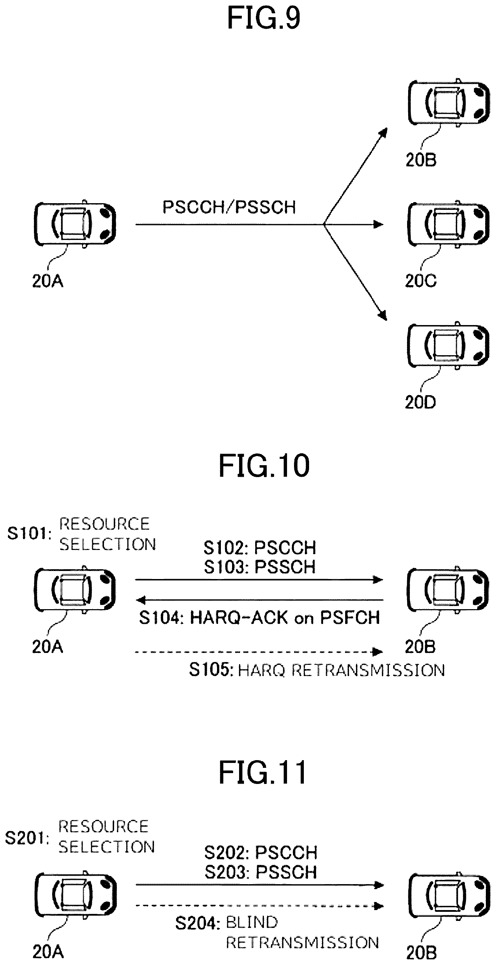

Fig. 9 is a diagram illustrating Example (3) of the communication type of V2X. The communication type of the sidelink illustrated in Fig. 9 is broadcast. The terminal 20A transmits PSCCH and PSSCH to one or a plurality of terminals 20. In the example illustrated in Fig. 9, the terminal 20A performs broadcast with respect to the terminal 20B, the terminal 20C, and a terminal 20D. Note that, the terminal 20A illustrated in Fig. 7 to Fig. 9 may be referred to as a header-UE.

In addition, in NR-V2X, it is expected that a hybrid automatic repeat request (HARQ) is supported by the unicast and the groupcast of the sidelink. Further, in NR-V2X, sidelink feedback control information (SFCI) including a HARQ response is defined. Further, it is discussed that SFCI is transmitted through a physical sidelink feedback channel (PSFCH).

Note that, in the following description, in the transmission of HARQ-ACK in the sidelink, PSFCH is used, which is an example. For example, the transmission of HARQ-ACK in the sidelink may be performed by using PSCCH, the transmission of HARQ-ACK in the sidelink may be performed by using PSSCH, or the transmission of HARQ-ACK in the sidelink may be performed by using another channel.

Hereinafter, for convenience sake, the overall information that is reported by the terminal 20 in HARQ will be referred to as HARQ-ACK. Such HARQ-ACK may be referred to as HARQ-ACK information. In addition, more specifically, a codebook to be applied to the HARQ-ACK information that is reported to the base station 10 and the like from the terminal 20 will be referred to as a HARQ-ACK codebook. The HARQ-ACK codebook defines a bit sequence of the HARQ-ACK information. Note that, not only ACK but also NACK are transmitted by "HARQ-ACK".

Fig. 10 is a sequence diagram illustrating Operation Example (1) of V2X. As illustrated in Fig. 10, the radio communication system according to the embodiment of the invention may include the terminal 20A and the terminal 20B. Note that, in practice, there are a plurality of user equipments, and, as the example of Fig. 10, the terminal 20A and the terminal 20B are illustrated.

Hereinafter, when the terminals 20A and 20B, and the like are not particularly distinguished from each other, the terminals 20A and 20B, and the like will be simply described as the "terminal 20" or the "user equipment". In Fig. 10, as an example, a case where both the terminal 20A and the terminal 20B are within the coverage of the cell is illustrated, but the operation of the embodiment of the invention can also be applied to a case where the terminal 20B is out of the coverage.

As described above, in this embodiment, the terminal 20, for example, is a device mounted on a vehicle such as an automobile, and has a cellular communication function and a sidelink function as UE in LTE or NR. The terminal 20 may be a typical portable terminal (a smart phone and the like). In addition, the terminal 20 may be RSU. RSU described above may be UE type RSU having the function of UE, or may be gNB type RSU having the function of a base station device.

Note that, it is not necessary that the terminal 20 is to be a device with one housing, and for example, even in a case where various sensors are dispersedly arranged in a vehicle, a device including the various sensors may be the terminal 20.

In addition, processing details of the transmission data of the sidelink of the terminal 20 are basically identical to processing details of UL transmission in LTE or NR. For example, the terminal 20 scrambles and modulates a codeword of transmission data to generate complex-valued symbols, maps the complex-valued symbols (transmission signals) to one or two layers, and performs precoding. Then, the terminal 20 maps the precoded complex-valued symbols to a resource element to generate a transmission signal (Example: a complex-valued time-domain SC-FDMA signal), and transmits the transmission signal from each antenna port.

Note that, the base station 10 has a cellular communication function as a base station in LTE or NR, and a function of enabling the communication of the terminal 20 in this embodiment (Example: resource pool configuration, resource allocation, and the like). In addition, the base station 10 may be RSU (gNB type RSU).

In addition, in the radio communication system according to the embodiment of the invention, a signal waveform that is used by the terminal 20 in SL or UL may be OFDMA, may be SC-FDMA, or may be other signal waveforms.

In step S101, the terminal 20A autonomously selects a resource to be used for the PSCCH and the PSSCH from a resource selection window having a predetermined period. The resource selection window may be configured by the base station 10 to the terminal 20.

In Step S102 and Step S103, the terminal 20A transmits sidelink control information (SCI) via PSCCH and/or PSSCH, and transmits SL data via PSSCH, using the resource autonomously selected in Step S101. For example, the terminal 20A may transmit PSCCH with a time resource that is same as at least a part of the time resource of PSSCH, using a frequency resource adjacent to a frequency resource of PSSCH.

The terminal 20B receives SCI (PSCCH and/or PSSCH) and the SL data (PSSCH) transmitted from the terminal 20A. The received SCI may include the information of the resource of PSFCH for the terminal 20B to transmit HARQ-ACK corresponding to the reception of the data. The terminal 20A may include the information of the autonomously selected resource in SCI to transmit the information.

In Step S104, the terminal 20B transmits HARQ-ACK corresponding to the received data to the terminal 20A by using the resource of PSFCH determined from the received SCI.

In Step S105, in a case where HARQ-ACK received in Step S104 indicates that retransmission is requested, that is, in a case where it is a negative response (NACK), the terminal 20A retransmits PSCCH and PSSCH to the terminal 20B. The terminal 20A may retransmit PSCCH and PSSCH by using the autonomously selected resource.

Note that, in a case where HARQ control is not executed, Step S104 and Step S105 need not be executed.

Fig. 11 is a sequence diagram illustrating Operation Example (2) of V2X. Blind retransmission, which is not based on the HARQ control, for improving a success rate or a reaching distance of the transmission may be executed.

In Step S201, the terminal 20A autonomously selects the resource that is to be used for PSCCH and PSSCH from the resource selection window having a predetermined period. The resource selection window may be configured in the terminal 20 by the base station 10.

In Step S202 and Step S203, the terminal 20A transmits SCI via PSCCH and/or PSSCH, and transmits the SL data via PSSCH, using the resource autonomously selected in Step S201. For example, the terminal 20A may transmit PSCCH with a time resource that is same as at least a part of the time resource of PSSCH, using a frequency resource adjacent to the frequency resource of PSSCH.

In Step S204, the terminal 20A retransmits SCI via PSCCH and/or PSSCH and the SL data via PSSCH to the terminal 20B by using the resource autonomously selected in Step S201. The retransmission in Step S204 may be executed a plurality of times.

Note that, in a case where the blind retransmission is not executed, Step S204 need not be executed.

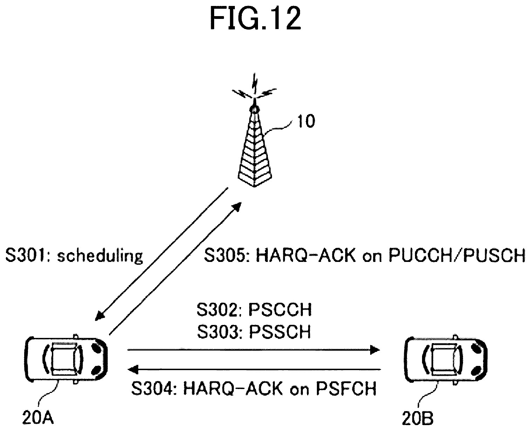

Fig. 12 is a sequence diagram illustrating Operation Example (3) of V2X. The base station 10 may perform the sidelink scheduling. That is, the base station 10 may determine a resource of the sidelink that is used by the terminal 20, and may transmit information indicating the resource to the terminal 20. Further, in a case where the HARQ control is applied, the base station 10 may transmit information indicating the resource of PSFCH to the terminal 20.

In Step S301, the base station 10 sends downlink control information (DCI) to the terminal 20A via PDCCH, thereby performing the SL scheduling. Hereinafter, for convenience sake, DCI for SL scheduling will be referred to as SL scheduling DCI.

In addition, in Step S301, it is expected that the base station 10 also transmits DCI for DL scheduling (may be referred to as DL allocation) to the terminal 20A via PDCCH. Hereinafter, for convenience sake, DCI for DL scheduling will be referred to as DL scheduling DCI. The terminal 20A that has received DL scheduling DCI receives DL data via PDSCH, using a resource that is specified by DL scheduling DCI.

In Step S302 and Step S303, the terminal 20A transmits the sidelink control information (SCI) via PSCCH and/or PSSCH, and transmits the SL data via PSSCH, using the resource specified by SL scheduling DCI. Note that, in SL scheduling DCI, only the resource of PSSCH may be specified. In this case, for example, the terminal 20A may transmit PSCCH with a time resource that is same as at least a part of the time resource of PSSCH, using a frequency resource adjacent to the frequency resource of PSSCH.

The terminal 20B receives SCI (PSCCH and/or PSSCH) and the SL data (PSSCH) transmitted from the terminal 20A. SCI received via PSCCH and/or PSSCH includes information of the resource of PSFCH for the terminal 20B to transmit HARQ-ACK corresponding to the reception of the data.

The information of the resource is included in DL scheduling DCI or SL scheduling DCI that is transmitted from the base station 10 in Step S301, and the terminal 20A acquires the information of the resource from the DL scheduling DCI or the SL scheduling DCI and includes the information in SCI. Alternatively, DCI to be transmitted from the base station 10 need not include the information of the resource, and the terminal 20A may autonomously include the information of the resource in SCI to transmit the information.

In Step S304, the terminal 20B transmit HARQ-ACK corresponding to the received data to the terminal 20A by using the resource of PSFCH determined from the received SCI.

In Step S305, the terminal 20A, for example, transmits HARQ-ACK by using a resource of a physical uplink control channel (PUCCH) specified by DL scheduling DCI (or SL scheduling DCI), and the base station 10 receives HARQ-ACK, at a timing specified by DL scheduling DCI (or SL scheduling DCI) (for example, a timing in slot unit). In the HARQ-ACK codebook, ARQ-ACK that is generated based on HARQ-ACK that is received from the terminal 20B or based on PSFCH that is not received from the terminal 20B, and HARQ-ACK corresponding to the DL data can be included. Here, in a case where there is no allocation of the DL data, HARQ-ACK corresponding to the DL data is not included. In NR Rel.16, in the HARQ-ACK codebook, HARQ-ACK corresponding to the DL data is not included.

Note that, in a case where the HARQ control is not executed, Step S304 and Step S305 need not be executed.

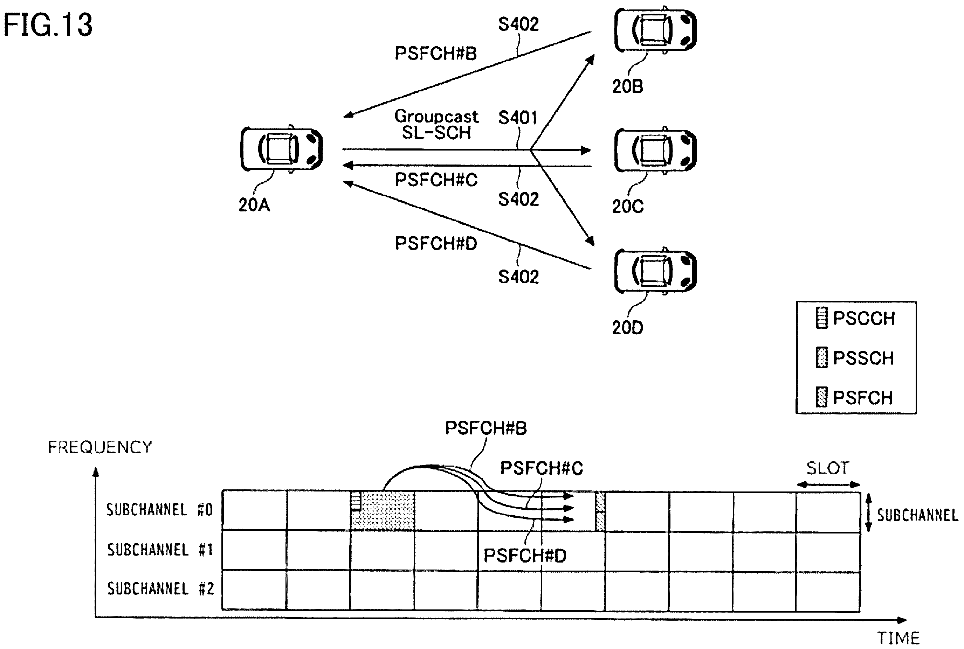

Fig. 13 is a sequence diagram illustrating Operation Example (4) of V2X. As described above, in the sidelink of NR, it is supported that the HARQ response is to be transmitted via PSFCH. Note that, as the format of PSFCH, for example, the same format as a physical uplink control channel (PUCCH) format 0 can be used. That is, the format of PSFCH may be a sequence-based format in which a physical resource block (PRB) size is 1, and ACK and NACK are identified by a difference in a sequence and/or a cyclic shift. The format of PSFCH is not limited thereto. The resource of PSFCH may be arranged in a symbol at the end of the slot or in a plurality of symbols at the end of the slot. In addition, whether or not a period N is configured for the PSFCH resource is defined in advance. The period N may be configured in slot unit, or may be defined in advance.

In Fig. 13, the vertical axis corresponds to the frequency domain, and the horizontal axis corresponds to the time domain. PSCCH may be arranged in one symbol at the head of the slot, may be arranged in a plurality of symbols from the head of the slot, or may be arranged in a plurality of symbols from a symbol that is not at the head of the slot. PSFCH may be arranged in one symbol at the end of the slot, or may be arranged in a plurality of symbols at the end of the slot. In the example illustrated in Fig. 13, three subchannels are configured in the resource pool, and two PSFCHs are arranged in the third slot after a slot in which PSSCH is arranged. An arrow to PSFCH from PSSCH indicates an example of PSFCH that is associated with PSSCH.

In a case where the HARQ response in the groupcast of NR-V2X is a groupcast option 2 for transmitting ACK or NACK, it is necessary to determine a resource that is used in the transmission and reception of PSFCH. As illustrated in Fig. 13, in Step S401, the terminal 20A, which is a transmission side terminal 20, performs groupcast with respect to the terminal 20B, the terminal 20C, and the terminal 20D, which are reception side terminals 20, via SL-SCH. Subsequently, in Step S402, the terminal 20B uses PSFCH#B, the terminal 20C uses PSFCH#C, and the terminal 20D uses PSFCH#D to transmit the HARQ response to the terminal 20A. Here, as illustrated in the example of Fig. 13, in a case where the number of available resources of PSFCH is less than the number of reception side terminals 20 belonging to the group, it is necessary to determine how to allocate the resources of PSFCH. Note that, the transmission side terminal 20 may have the number of reception side terminals 20 in the groupcast. Note that, in a groupcast option 1, only NACK is transmitted as the HARQ response, and ACK is not transmitted.

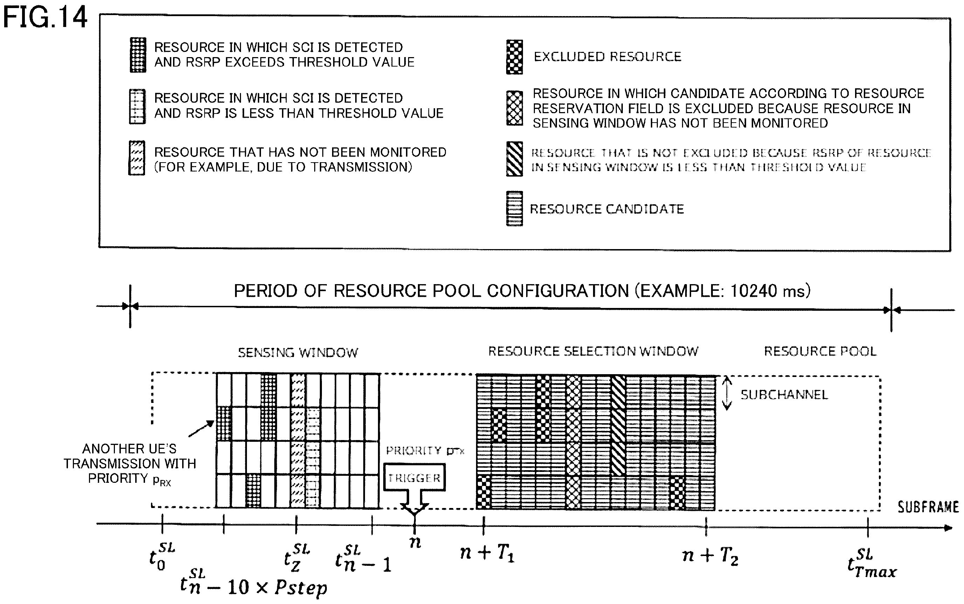

Fig. 14 is a diagram illustrating an example of a sensing operation. In a case where partial sensing is not configured by a higher layer in an LTE sidelink, as illustrated in Fig. 14, the terminal 20 performs transmission by selecting a resource. As illustrated in Fig. 14, the terminal 20 executes sensing in a sensing window in the resource pool. By the sensing, the terminal 20 receives a resource reservation field that is included in SCI to be transmitted from another terminal 20, and identifies available resource candidates in the resource selection window in the resource pool, based on the field. Subsequently, the terminal 20 randomly selects a resource from the available resource candidates. Sensing all the resources in the sensing window may be referred to as full sensing.

In addition, as illustrated in Fig. 14, the configuration of the resource pool may have a period. For example, the period may be a period of 10240 milliseconds. Fig. 14 is an example in which subframes from a subframe t₀^{SL} to a subframe t_{Tmax}^{SL} are configured as the resource pool. The domain of the resource pool in the period may be configured by a bitmap, for example.

In addition, as illustrated in Fig. 14, a transmission trigger in the terminal 20 occurs in a subframe n, and the transmission priority is p_{TX}. The terminal 20, for example, is capable of detecting that another terminal 20 performs transmission with a priority p_{RX}, in the sensing window from a subframe t_{n-10×Pstep}^{SL} to a subframe tₙ₋₁^{SL}. In a case where SCI is detected in the sensing window, and an RSRP is greater than a threshold value, the resource in the resource selection window corresponding to the SCI is excluded. In addition, in a case where SCI is detected in the sensing window, and RSRP is less than the threshold value, the resource in the resource selection window corresponding to the SCI is not excluded. The threshold value, for example, may be a threshold value Th_{pTX, pRX} to be configured or defined for each resource in the sensing window, based on the priority p_{TX} and the priority p_{RX}.

In addition, as with a subframe t_{Z}^{SL} illustrated in Fig. 14, a resource in the resource selection window to be a candidate of resource reservation information corresponding to a resource that has not been monitored, for example, due to transmission, in the sensing window, is excluded.

As illustrated in Fig. 14, in the resource selection window from a subframe n+T₁ to a subframe n+T₂, a resource occupied by another UE is identified, and resources excluding the resource are the available resource candidates. In a case where a set of available resource candidates is denoted as S_{A}, and S_{A} is less than 20% of the resources in the resource selection window, the threshold value Th_{pTX, pRX} that is configured for each resource in the sensing window may be increased by 3dB, and the identification of the resource may be executed again. That is, the threshold value Th_{pTX, pRX} is increased, and the identification of the resource is executed again, and thus, the resources that are not excluded because of RSRP being less than the threshold value may be increased. Further, a RSSI of each of the resources of S_{A} may be measured, and a resource with the minimum RSSI may be added to a set S_{B}. An operation of adding the resource with the minimum RSSI included in S_{A} to S_{B} may be repeated until the set of resource candidates S_{B} becomes greater than or equal to 20% of the resource selection window.

A lower layer of the terminal 20 may report S_{B} to a higher layer. The higher layer of the terminal 20 may determine a resource to be used, by executing random selection with respect to S_{B}. The terminal 20 may execute sidelink transmission by using the determined resource. Note that, after ensuring the resources, the terminal 20 may periodically use the resources without performing the sensing a predetermined number of times (for example, Cᵣₑₛₑₗ times) .

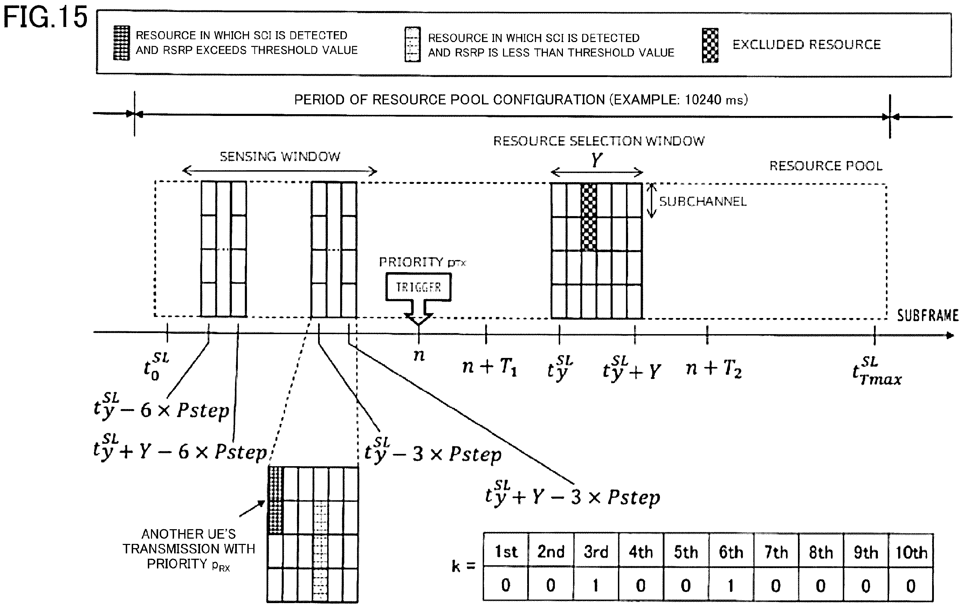

Fig. 15 is a diagram illustrating an example of a partial sensing operation. In a case where the partial sensing is configured by the higher layer in the LTE sidelink, the terminal 20 performs transmission by selecting a resource as illustrated in Fig. 15. As illustrated in Fig. 15, the terminal 20 executes the partial sensing with respect to a part of the sensing window in the resource pool. According to the partial sensing, the terminal 20 receives a resource reservation field that is included in SCI to be transmitted from another terminal 20, and identifies the available resource candidates in the resource selection window in the resource pool, based on the field. Subsequently, the terminal 20 randomly selects a resource from the available resource candidates.

In addition, as illustrated in Fig. 15, the configuration of the resource pool may have a period. For example, the period may be a period of 10240 milliseconds. Fig. 15 is an example in which subframes from the subframe t₀^{SL} to the subframe t_{Tmax}^{SL} are configured as the resource pool. The domain of the resource pool in the period may be configured by a bitmap, for example.

As shown in Fig. 15, it is assumed that a transmission trigger in the terminal 20 is generated in the subframe n and the priority of the transmission is p_{TX}. As shown in Fig. 15, among the subframes n+T₁ to n+T₂, Y subframes from the subframe t_{y}^{SL} to the subframe t_{y+Y}^{SL} may be configured as a resource selection window. In addition, as shown in Fig. 15, it is assumed that a transmission trigger in the terminal 20 is generated in the subframe n and the priority of the transmission is p_{TX}.

The terminal 20 can detect, for example, that another terminal 20 is performing transmission with the priority p_{RX} in one or more sensing windows having a Y subframe length from the subframe t_{y-k×Pstep}^{SL} to the subframe t_{y+Y-k×Pstep}^{SL}. k may be, for example, a 10-bit bitmap. Fig. 15 shows an example in which the third and sixth bits of the bitmap k are configured to "1" indicating that partial sensing is to be performed. That is, in Fig. 15, subframes from t_{y-6×Pstep}^{SL} to t_{y+Y-6×Pstep}^{SL} and subframes from t_{y-3×Pstep}^{SL} to t_{y+Y-3×Pstep}^{SL} are configured as a sensing window. As described above, the i-th bit of the bitmap k may correspond to a sensing window from the subframe t_{y-i×Pstep}^{SL} to the subframe t_{y+Y-i×Pstep}^{SL}.

In a case where the SCI is detected in the one or more sensing windows and the RSRP exceeds the threshold value, the resources in the resource selection window corresponding to the SCI are excluded. In addition, in a case where the SCI is detected in the sensing window and the RSRP is less than the threshold value, the resources in the resource selection window corresponding to the SCI are not excluded. The threshold value may be, for example, a threshold value Th_{pTX}, _{pRX} configured or defined for each resource in the sensing window based on the priority p_{TX} and the priority p_{RX}.

In the resource selection window in which the Y subframes are configured, the terminal 20 identifies resources occupied by another UE, and resources excluding the resources become available resource candidates. Assuming that the set of available resource candidates is S_{A}, in a case where S_{A} is less than 20% of the resources in the resource selection window, the threshold value Th_{pTX}, _{pRX} configured for each resource in the sensing window may be increased by 3 dB and resource identification may be performed again. That is, by increasing the threshold value Th_{pTX, pRX} and performing the resource identification again, resources that are not excluded because the RSRP is less than the threshold value may be increased. In addition, the RSSI of each resource of S_{A} may be measured, and a resource having a smallest RSSI may be added to a set S_{B}. The operation of adding a resource having a smallest RSSI included in S_{A} to S_{B} may be repeated until the set S_{B} of the resource candidates becomes 20% or more of the resource selection window.

The lower layer of the terminal 20 may report S_{B} to the upper layer. The upper layer of the terminal 20 performs random selection with respect to S_{B} to determine the resources to be used. The terminal 20 may perform sidelink transmission by using the determined resources. Note that, once the resources are secured, thereafter, the terminal 20 may use the resources periodically without performing sensing a predetermined number of times (for example, Cᵣₑₛₑₗ times) .

Although the operation of the transmitting side terminal 20 has been described with reference to Figs. 14 and 15 described above, the receiving side terminal 20 may detect data transmission from another terminal 20 based on the result of sensing or partial sensing and may receive the data from the another terminal 20.

Here, in the NR release 17 sidelink, power saving based on the above-described random resource selection and partial sensing is being discussed. For example, in order to save power, the random resource selection and partial sensing of the sidelink in LTE release 14 may be applied to the Resource allocation mode 2 of the NR release 16 sidelink. The terminal 20 to which the partial sensing is applied performs reception and sensing only in a specific slot in the sensing window.

In addition, in the NR release 17 sidelink, eURLLC (enhanced Ultra Reliable Low Latency Communication) is being discussed with inter-UE coordination as a baseline. For example, the terminal 20A shares information indicating a resource set with the terminal 20B, and the terminal 20B considers the information in resource selection for transmission.

Here, the terminal 20 (power saving UE) that performs a power saving operation performs data transmission, data reception, or sensing only at a specific timing. On the other hand, in order to perform retransmission by HARQ (Hybrid automatic repeat request) feedback, transmission and reception of initial transmission data and retransmission data and transmission and reception of HARQ feedback are required. In addition, the resource used for retransmission is reserved by the control signal that is accompanied with the initial transmission data. For this reason, depending on the timing, it is expected that the terminal 20 performing the power saving operation cannot process the retransmission by HARQ feedback. Note that, the timing may refer to, for example, one or more periodic slots, or may refer to a freely-selected section period in another time domain unit.

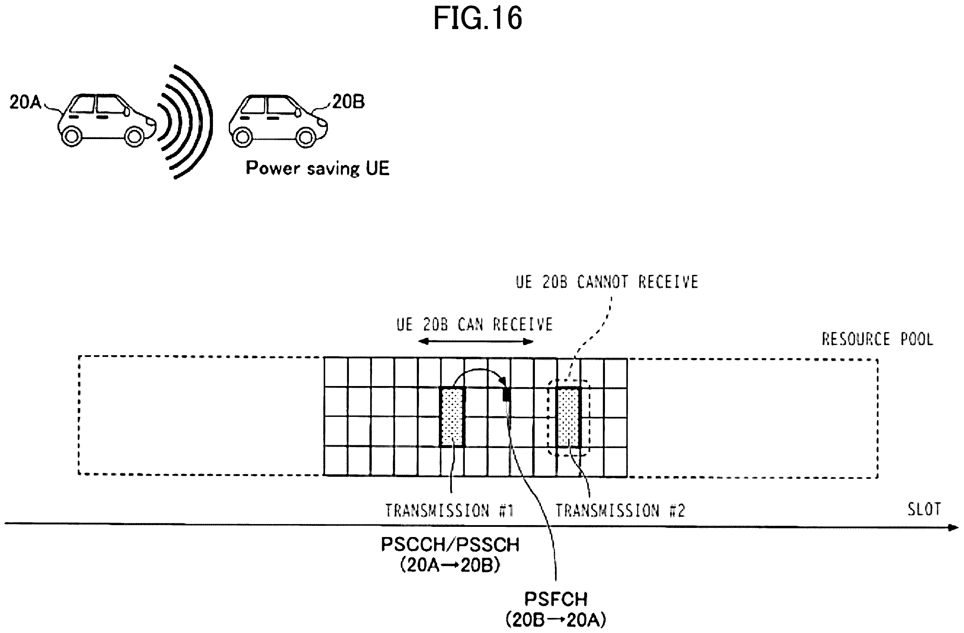

Fig. 16 is a diagram illustrating an example (1) of the transmission and reception operation. In a case where the terminal 20A performs transmission to the terminal 20B that performs a power saving operation, the timing at which the terminal 20B can perform the reception is limited. For example, as shown in Fig. 16, even if PSCCH/PSSCH transmission #1 that is a first transmission and PSFCH that is a HARQ feedback are included in a timing at which the reception of the terminal 20B is possible, in a case where PSCCH/PSSCH transmission #2 that is a retransmission is not included in the timing, the terminal 20B may be unable to receive the retransmission by the HARQ feedback.

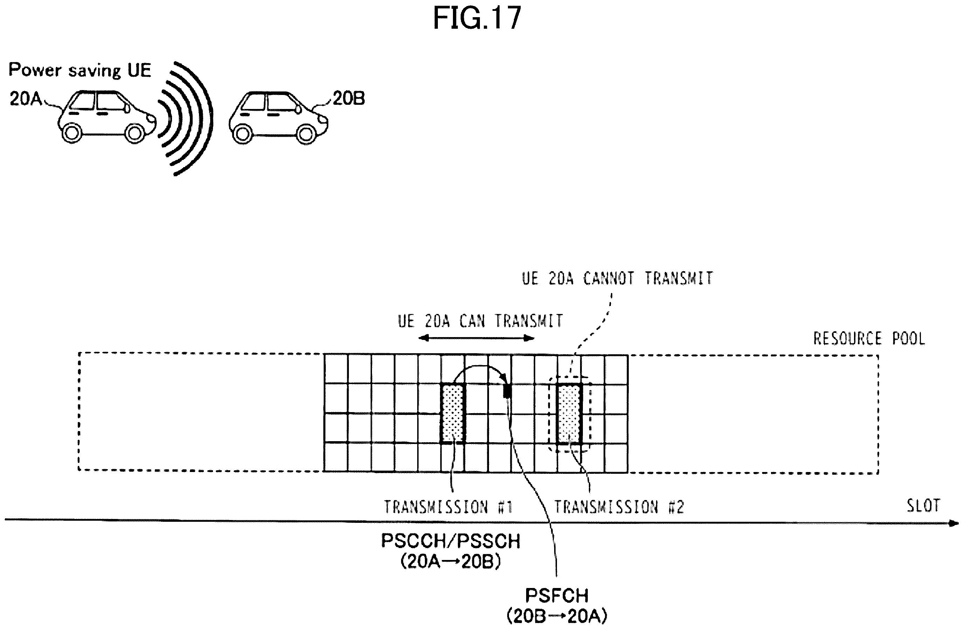

Fig. 17 is a diagram illustrating an example (2) of the transmission and reception operation. In a case where the terminal 20A that performs a power saving operation performs transmission to the terminal 20B, the timing at which the terminal 20A can perform the transmission is limited. For example, as shown in Fig. 16, even if the PSCCH/PSSCH transmission #1 that is a first transmission and the PSFCH that is a HARQ feedback are included in a timing at which the transmission of the terminal 20A is possible, in a case where the PSCCH/PSSCH transmission #2 that is a retransmission is not included in the timing, the terminal 20A may be unable to transmit the retransmission by the HARQ feedback.

Therefore, in a case where at least one of the transmitting side terminal 20 and the receiving side terminal 20 performs a power saving operation and where retransmission by HARQ is assumed, the terminal 20 may perform an operation related to at least one of resource selection, transmission, and reception, by taking into account retransmission by HARQ.

Note that, the power saving operation may be, for example, at least one of the following 1) to 3).
1) Transmission only at a specific timing
2) Reception only at a specific timing
3) Sensing only at a specific timing

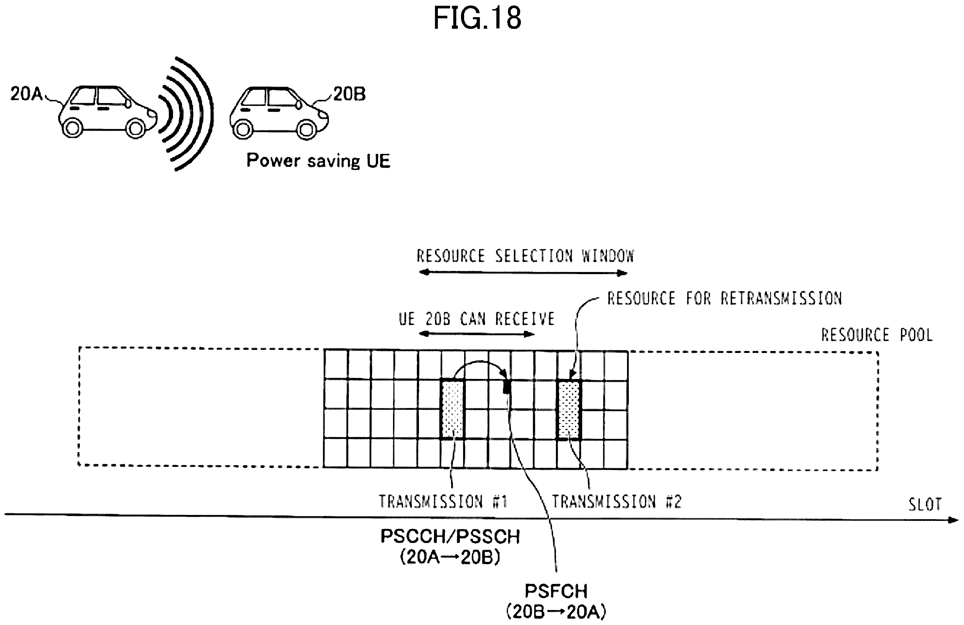

Fig. 18 is a diagram illustrating an example (1) of the transmission and reception operation in the embodiment of the invention. In a case where the receiving side terminal 20B performs a power saving operation, retransmission based on the HARQ feedback may be received regardless of the timing, and the decoding may be attempted. As shown in Fig. 18, with respect to the initial transmission of a certain transport block, that is, PSCCH/PSSCH, the transmission is to be performed at a timing at which the reception of the receiving side terminal 20B that performs the power saving operation is possible, may be essential.

The transmitting side terminal 20A may select and reserve a resource for retransmission without considering the timing at which the receiving side terminal 20B can perform the reception. That is, the transmitting side terminal 20A may select and reserve a resource for retransmission from a period that includes the timing at which the receiving side terminal 20B can perform the reception, or may select and reserve a resource for retransmission from a period that does not include the timing at which the receiving side terminal 20B can perform the reception.

In addition, the resource selection window used by the transmitting side terminal 20A may be configured from the first slot of the timing at which the receiving side terminal 20B can perform the reception, or may be configured from any slot of the timing at which the receiving side terminal 20B can perform the reception.

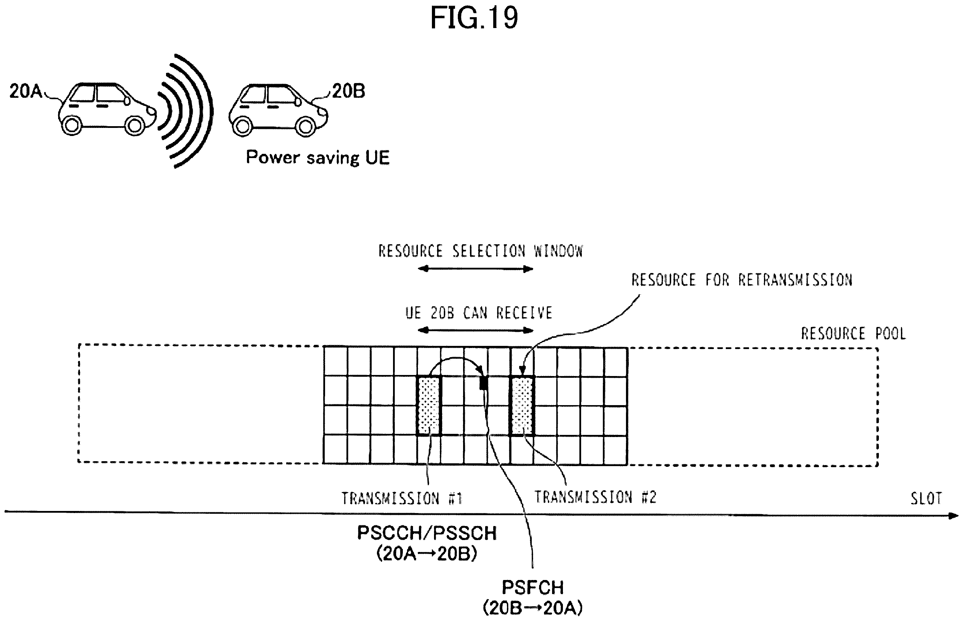

Fig. 19 is a diagram illustrating an example (2) of the transmission and reception operation in the embodiment of the invention. In a case where the receiving side terminal 20B performs a power saving operation, as shown in Fig. 19, the transmitting side terminal 20A may preferentially select and reserve a resource, which is included in the timing at which the receiving side terminal 20B can perform the reception, when selecting and reserving a resource for retransmission. In addition, as shown in Fig. 19, the transmitting side terminal 20A may configure, as a resource selection window, the timing at which the receiving side terminal 20B can perform the reception.

Note that, in a case where the transmitting side terminal 20A cannot select a resource for retransmission from the resources included in the timing at which the receiving side terminal 20B can perform the reception, the transmitting side terminal 20A may select and reserve the resource for retransmission without considering the timing at which the receiving side terminal 20B can perform the reception. In addition, in a case where the transmitting side terminal 20A cannot select a resource for retransmission from the resources included in the timing at which the receiving side terminal 20B can perform the reception, the transmitting side terminal 20A may configure the resource selection window from the first slot of the timing at which the receiving side terminal 20B can perform the reception.

The above-described "a case in which the transmitting side terminal 20A cannot select a resource for retransmission from the resources included in the timing at which the receiving side terminal 20B can perform the reception " may be, for example, a case in which, as a result of resource exclusion, the percentage of available resources does not exceed a threshold value X% with respect to all resources in the resource selection window. In addition, "a case where the transmitting side terminal 20A cannot select a resource for retransmission from the resources included in the timing at which the receiving side terminal 20B can perform the reception " may be, for example, a case in which there is no resource candidate for retransmission due to at least one of: the processing time for HARQ feedback; and the time range that can be specified by a certain SCI.

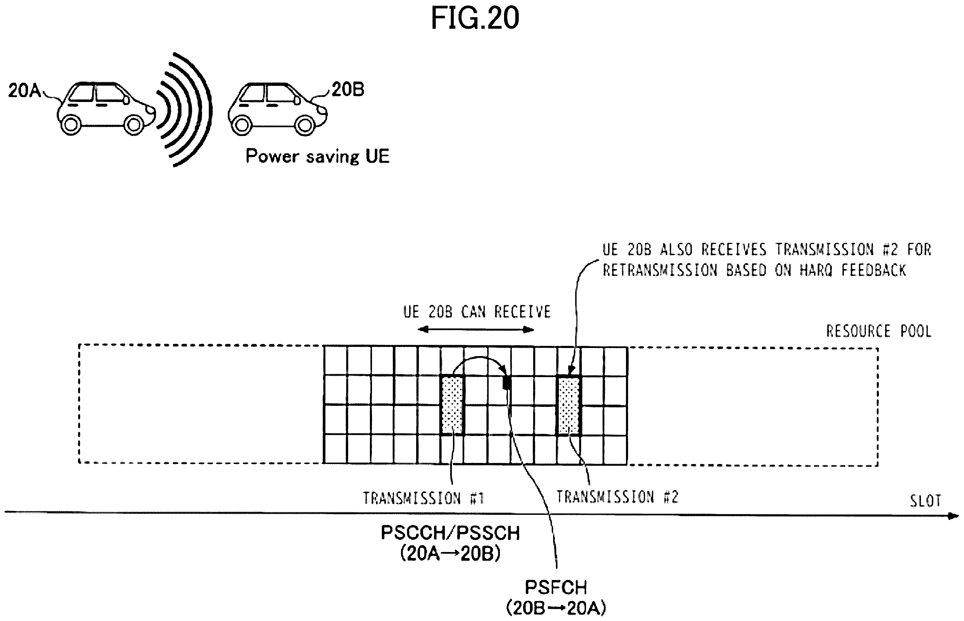

Fig. 20 is a diagram illustrating an example (3) of the transmission and reception operation in the embodiment of the invention. In a case where the receiving side terminal 20B performs a power saving operation, as shown in Fig. 20, if a resource, which is originally not supposed to be received, is reserved as a resource for retransmission, then the receiving side terminal 20B may receive the resource for retransmission. Alternatively, if a resource, which is originally not supposed to be received, is reserved as a resource for retransmission, then the receiving side terminal 20B does not have to receive the resource for retransmission.

In a case where a resource, which is originally not supposed to be received, is received as a resource for retransmission as described above, the receiving side terminal 20B may transmit the HARQ feedback on the PSFCH corresponding to the resource for retransmission, or does not have to transmit the HARQ feedback.

Because the transmission and reception operation is performed as shown in Figs. 18, 19, and 20 described above, in a case where the receiving side terminal 20B performs a power saving operation, the transmitting side terminal 20A can perform retransmission based on the HARQ feedback without being limited by the timing at which the receiving side terminal 20B can perform the reception. That is, the resource utilization efficiency is improved.

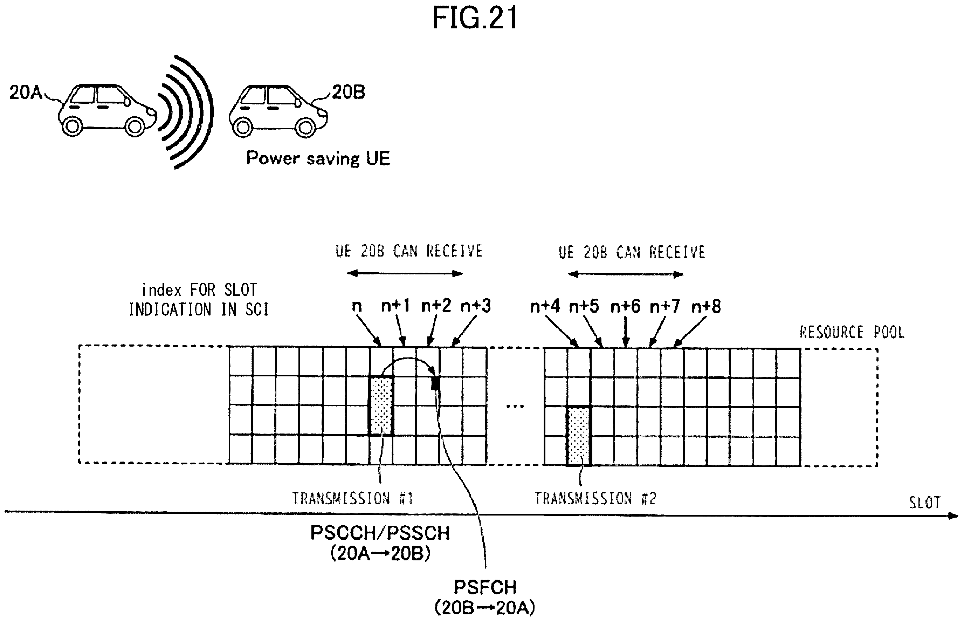

Fig. 21 is a diagram illustrating an example (4) of the transmission and reception operation in the embodiment of the invention. In a case where the receiving side terminal 20B performs a power saving operation, as shown in Fig. 21, the retransmission based on the HARQ feedback may be performed at the timing at which the receiving side terminal 20B can perform the reception. In a case where the receiving side terminal 20B performs a power saving operation, the transmitting side terminal 20A may select the first resource in the time domain, among the resource candidates included in the timing at which the receiving side terminal 20B can perform the reception, in resource selection.

In addition, as shown in Fig. 20, slot indications for reserving resources for retransmission in the SCI may be counted only at the timing at which the receiving side terminal 20B can perform the reception. That is, the timing at which the receiving side terminal 20B can perform the reception may be shared by the transmitting side terminal 20. Fig. 20 shows an example in which, when transmission #1 is performed in slot n, the slot index in the SCI is assigned only to slots in which the receiving side terminal 20B can perform the reception with the slot n as a reference. n+4 is a slot index in the SCI, and the corresponding slot is included in the timing at which the receiving side terminal 20B can perform the reception.

In addition, information indicating that the transmission is addressed to a terminal that performs a power saving operation may be indicated by the SCI. In addition, information indicating that the slot indication is counted only at the timing at which the receiving side terminal 20B can perform the reception, may be indicated by the SCI.

Note that, in a case where the transmitting side terminal 20A cannot provide an indication for reserving the timing at which the receiving side terminal 20B can perform the reception, the transmitting side terminal 20A may be allowed to retransmit a certain transport block without resource reservation. For example, the case where the transmitting side terminal 20A cannot provide an indication for reserving the timing at which the receiving side terminal 20B can perform the reception may be a case where the number of slots between the transmission #1 and the transmission #2 is equal to or larger than 32 (or larger than 32).

By performing the transmission and reception operation as shown in Fig. 21, in a case where the receiving side terminal 20B performs a power saving operation, the transmitting side terminal 20A can perform a retransmission operation without increasing the time for the receiving side terminal 20B to perform reception. That is, the power saving effect is increased.

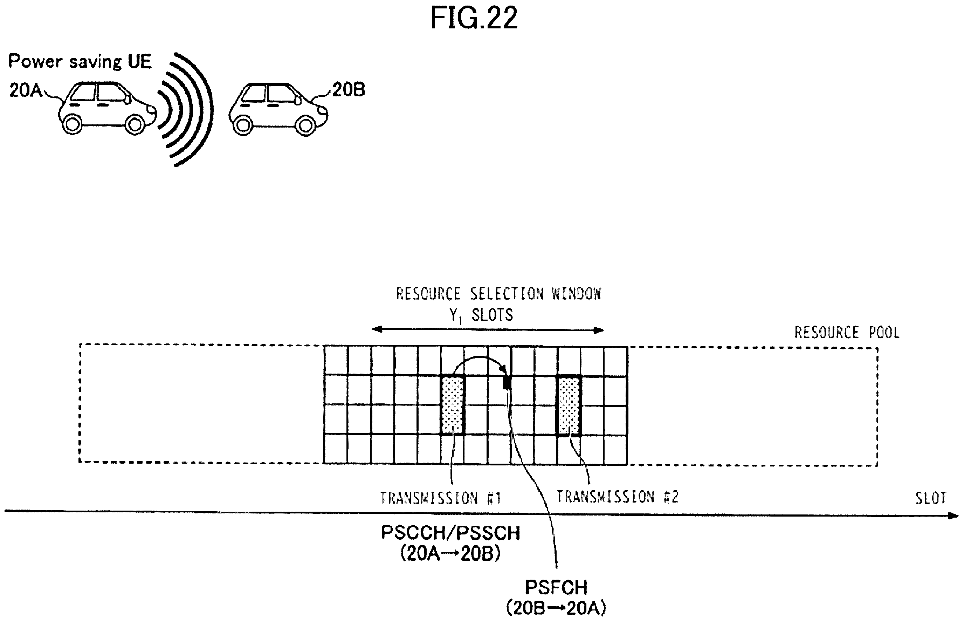

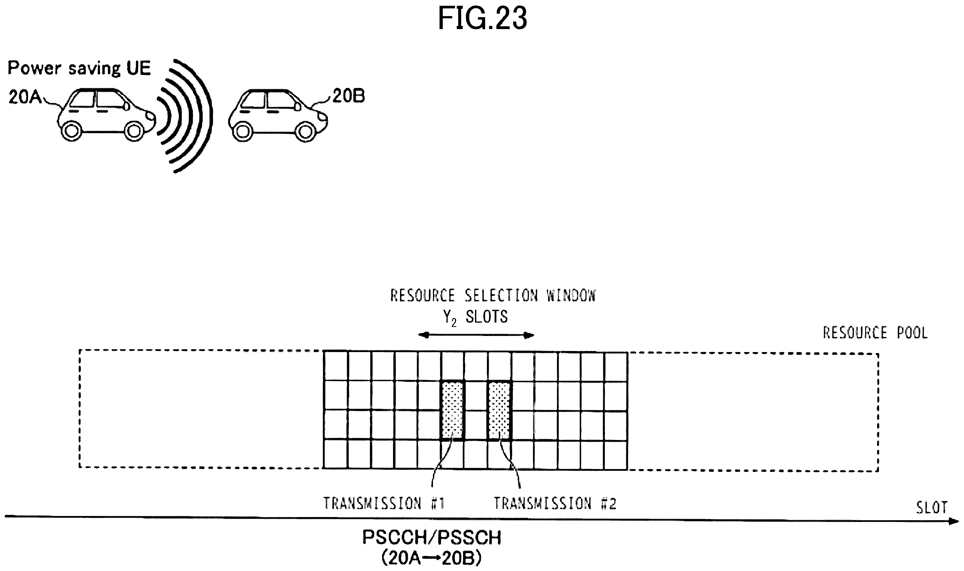

Fig. 22 is a diagram illustrating an example (5) of the transmission and reception operation in the embodiment of the invention. Fig. 23 is a diagram illustrating an example (6) of the transmission and reception operation in the embodiment of the invention. In a case where the transmitting side terminal 20A performs a power saving operation, as shown in Figs. 22 and 23, the transmitting side terminal 20A may configure the resource selection window, based on whether or not the resource selection is for retransmission based on the HARQ feedback.

For example, in a case where the resource selection is for retransmission based on the HARQ feedback, the transmitting side terminal 20A may configure the resource selection window as Y₁ slots as shown in Fig. 22. Y₁ may be a value equal to a specific parameter, or may be a value according to UE implementation that is greater than the parameter.

For example, in a case where the resource selection is not for retransmission based on the HARQ feedback, the transmitting side terminal 20A may configure the resource selection window as Y₂ slots as shown in Fig. 23. Y₂ may be a value equal to a specific parameter different from the parameter related to Y₁, or may be a value according to UE implementation that is greater than the parameter.

For example, Y₂ may be greater than Y₂ (Y₁ > Y₂). Y₁ and Y₂ may be associated with, for example, the priority of the data to be transmitted, or may be associated with, for example, the packet delay budget of the data to be transmitted.

Note that, the resource selection window may be non-contiguous in the time domain.

By performing the transmission and reception operation as shown in Figs. 22 and 23, the transmitting side terminal 20A that performs a power saving operation can enlarge the resource selection window only in a case where a large resource selection window is required. That is, because it is possible to suppress the sensing more than required, the power saving effect is increased.

In addition, in a case where the transmitting side terminal 20A performs a power saving operation, the transmitting side terminal 20A may configure the resource selection window, based on whether or not the resource selection for retransmission based on the HARQ feedback is successful.

For example, when performing resource selection for retransmission based on the HARQ feedback, the transmitting side terminal 20A may configure the resource selection window as Y₃ slots. Y₃ may be a value equal to a specific parameter, or may be a value according to UE implementation that is greater than the parameter. A resource candidate may be determined by performing a sensing operation (for example, partial sensing) corresponding to the Y₃ slots and/or by performing a resource exclusion operation in the Y₃ slots.

For example, in a case where the resource selection for retransmission based on the HARQ feedback fails in the resource selection window of the Y₃ slots, the transmitting side terminal 20A may change the resource selection window from the Y₃ slots to the Y₄ slots. Y₄ may be a value equal to a specific parameter different from the parameter related to Y₃, or may be a value according to UE implementation that is greater than the parameter. For example, Y₄ may be larger than Y₃ (Y₄ > Y₃).

In addition, when performing resource selection for retransmission based on the HARQ feedback, the transmitting side terminal 20A may perform the resource exclusion operation again by changing the RSRP threshold value each time the resource selection fails in the resource selection window configured to the Y₃ slots. In addition, in a case where the resource selection fails even if the RSRP threshold value is changed M times, the transmitting side terminal 20A may determine that the resource selection for retransmission based on the HARQ feedback has failed in the resource selection window of the Y₃ slots and may change the resource selection window from the Y₃ slots to the Y₄ slots. M may be a value equal to a specific parameter, or may be a value according to UE implementation that is greater than the parameter.

Note that, the resource selection window may be non-contiguous in the time domain.

For example, in a case where the resource selection for retransmission based on the HARQ feedback fails in the resource selection window of the Y₃ slots, the transmitting side terminal 20A may perform the sensing and/or resource exclusion operation again by changing the position of the resource selection window. With respect to the changed position of the resource selection window, an offset may be configured in advance or may be determined by UE implementation.

In addition, when performing resource selection for retransmission based on the HARQ feedback, the transmitting side terminal 20A may perform the resource exclusion operation again by changing Y₃ each time the resource selection fails in the resource selection window configured to the Y₃ slots. For example, Y₃ may be incremented by one or more each time the resource selection fails. In addition, in a case where the resource selection fails even if Y₃ is changed N times, the transmitting side terminal 20A may determine that the resource selection for retransmission based on the HARQ feedback has failed in the resource selection window of the Y₃ slots and may change the resource selection window from the Y₃ slots to the Y₄ slots. N may be a value equal to a specific parameter, or may be a value according to UE implementation that is greater than the parameter. Alternatively, in a case where Y₃ increases and reaches Y_{MAX}, the transmitting side terminal 20A may determine that the resource selection for retransmission based on the HARQ feedback has failed in the resource selection window of the Y₃ slots and may change the resource selection window from the Y₃ slots to the Y₄ slots. That is, Y_{MAX} may be a threshold value indicating an upper limit of the size of the resource selection window when it is determined that the resource selection has failed.

As described above, by configuring the resource selection window based on whether or not the resource selection for retransmission based on the HARQ feedback is successful, it is possible to normally use a relatively small resource window, and to change the size or position of the resource selection window in a case where the necessity arises. That is, because it is possible to suppress the sensing more than required, the power saving effect is increased.

Note that, the terminal 20 that performs a power saving operation may be the terminal 20 that performs partial sensing, may be the terminal 20 configured to perform partial sensing, may be the terminal 20 configured in advance so as to perform partial sensing, may be the terminal 20 that performs a sensing method different from full sensing specified in Release 16, may be the terminal 20 that does not perform sensing, or may be the terminal 20 (for example, DRX) that performs reception only in the limited time.

Note that, the full sensing may mean sensing all resources in the sensing window. The sensing window may be specified by the slot section [n-T₀, n-T_{proc, 0}], and n may be a slot corresponding to the packet arrival timing.

In the embodiment described above, the receiving side terminal 20 may be a plurality of terminals 20 or may belong to the same group. In addition, both the receiving side terminal 20 and the transmitting side terminal 20 may be the terminals 20 that perform a power saving operation.

In the embodiment described above, retransmission need not be limited to the retransmission based on the HARQ feedback. For example, retransmission may correspond to multiple transmissions of the same transport block.

In the embodiment described above, the terminal 20 is not limited to the V2X terminal, and may be any terminal as long as it performs D2D.

In the embodiment described above, the transmitting side terminal 20A may be aware of the timing at which the receiving side terminal 20B can perform the reception and/or the timing at which the receiving side terminal 20B can perform the transmission. For example, the timing may be specified by technical specifications, or the transmitting side terminal 20A may be aware of the timing in advance according to configuration or pre-configuration. In addition, the transmitting side terminal 20A may be aware of the timing by an indication between terminals or an indication from the base station 10.

According to the embodiment described above, when the receiving side terminal 20 and/or the transmitting side terminal 20 performs a power saving operation, control by the HARQ feedback can be performed without hindering the power saving operation, by performing the resource selection in accordance with the resource limitation due to the power saving operation.

That is, in the terminal-to-terminal direct communication, it is possible to perform an operation related to the HARQ (Hybrid automatic repeat request) suitable for the power saving operation.

### (Device configuration)

Next, functional configuration examples of the base station 10 and the terminal 20 that execute the processes and the operations described so far will be described. The base station 10 and the terminal 20 have functions for implementing the embodiment described above. However, each of the base station 10 and the terminal 20 may have only some of the functions in the embodiment.

### <Base station 10>

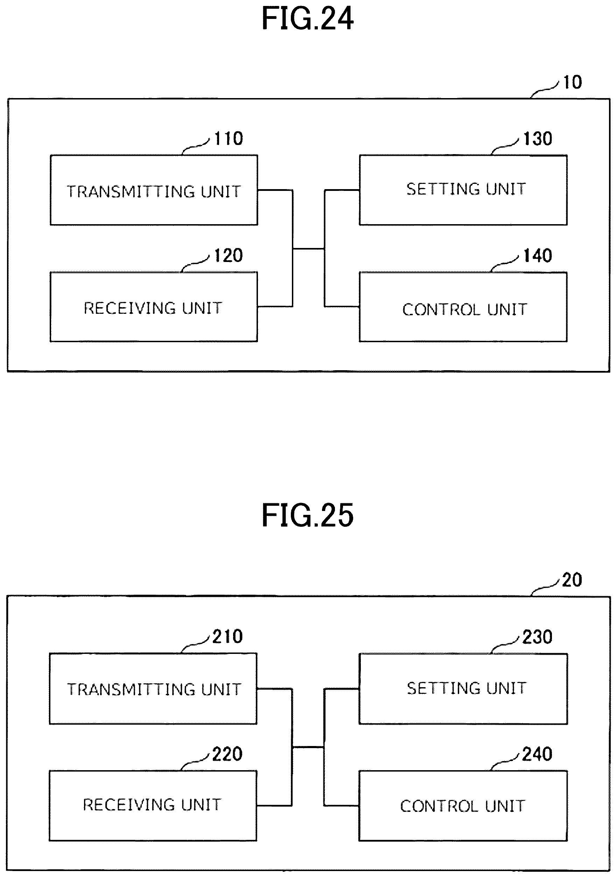

Fig. 24 is a diagram showing an example of the functional configuration of the base station 10. As shown in Fig. 24, the base station 10 includes a transmitting unit 110, a receiving unit 120, a setting unit 130, and a control unit 140. The functional configuration shown in Fig. 24 is only an example. As long as the operation according to the embodiment of the invention can be performed, any functional division and any name of each functional unit may be applied.

The transmitting unit 110 has a function of generating a signal to be transmitted to the terminal 20 and transmitting the signal wirelessly. The receiving unit 120 has a function of receiving various signals transmitted from the terminal 20 and acquiring, for example, information of higher layers from the received signals. In addition, the transmitting unit 110 has a function of transmitting NR-PSS, NR-SSS, NR-PBCH, a DL/UL control signal, a DL reference signal, and the like to the terminal 20.

The setting unit 130 stores pre-configured setup information and various kinds of setup information to be transmitted to the terminal 20 in a storage device, and reads out the pieces of setup information from the storage device as necessary. The content of the setup information is, for example, information regarding the setting of D2D communication.

As described in the embodiment, the control unit 140 performs processing related to the setting for the terminal 20 to perform D2D communication. In addition, the control unit 140 transmits the scheduling of D2D communication and DL communication to the terminal 20 through the transmitting unit 110. In addition, the control unit 140 receives information regarding the HARQ response of the D2D communication and the DL communication from the terminal 20 through the receiving unit 120. A functional unit related to signal transmission in the control unit 140 may be included in the transmitting unit 110, and a functional unit related to signal reception in the control unit 140 may be included in the receiving unit 120.

### <Terminal 20>

Fig. 25 is a diagram showing an example of the functional configuration of the terminal 20. As shown in Fig. 25, the terminal 20 includes a transmitting unit 210, a receiving unit 220, a setting unit 230, and a control unit 240. The functional configuration shown in Fig. 25 is merely an example. As long as the operation according to the embodiment of the invention can be performed, any functional division and any name of each functional unit may be applied.

The transmitting unit 210 generates a transmission signal from transmission data, and transmits the transmission signal wirelessly. The receiving unit 220 wirelessly receives various signals, and acquires a higher-layer signal from the received physical layer signal. In addition, the receiving unit 220 has a function of receiving NR-PSS, NR-SSS, NR-PBCH, a DL/UL/SL control signal, a reference signal, and the like transmitted from the base station 10. In addition, for example, the transmitting unit 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to another terminal 20 as D2D communication, and the receiving unit 220 receives the PSCCH, the PSSCH, the PSDCH, the PSBCH, and the like from another terminal 20.

The setting unit 230 stores the various kinds of setup information, which have been received from the base station 10 or the terminal 20 by the receiving unit 220, in a storage device, and reads out the pieces of setup information from the storage device as necessary. In addition, the setting unit 230 stores the pre-configured setup information. The content of the setup information is, for example, information regarding the setting of D2D communication.

The control unit 240 controls D2D communication with another terminal 20 as described in the embodiment. In addition, the control unit 240 performs processing related to HARQ of D2D communication and DL communication. In addition, the control unit 240 transmits, to the base station 10, information regarding the HARQ response of the D2D communication and the DL communication from the base station 10 to another terminal 20 scheduled. In addition, the control unit 240 may perform the scheduling of the D2D communication to another terminal 20. In addition, the control unit 240 may autonomously select a resource to be used in the D2D communication from the resource selection window based on the sensing result. In addition, the control unit 240 performs processing related to power saving in transmission and reception of the D2D communication. A functional unit related to signal transmission in the control unit 240 may be included in the transmitting unit 210, and a functional unit related to signal reception in the control unit 240 may be included in the receiving unit 220.

### (Hardware configuration)

The block diagrams (Figs. 24 and 25) used in the description of the above embodiment show blocks in functional units. These functional blocks (configuration units) are realized by any combination of at least one of hardware and software. In addition, a method of realizing each functional block is not particularly limited. That is, each functional block may be realized using one physically or logically coupled device, or may be realized by connecting two or more physically or logically separated devices directly or indirectly (for example, using a wired or wireless connection) and using the plurality of devices. Each functional block may be realized by combining the above-described one device or the above-described plurality of devices with software.

Functions include determining, judging, calculating, computing, processing, deriving, investigating, searching, ascertaining, receiving, transmitting, outputting, accessing, resolving, selecting, choosing, establishing, comparing, assuming, expecting, regarding, broadcasting, notifying, communicating, forwarding, configuring, reconfiguring, allocating, mapping, assigning, and the like, but are not limited thereto. For example, a functional block (configuration unit) that makes the transmission work is called a transmitting unit or a transmitter. In any case, as described above, the implementation method is not particularly limited.

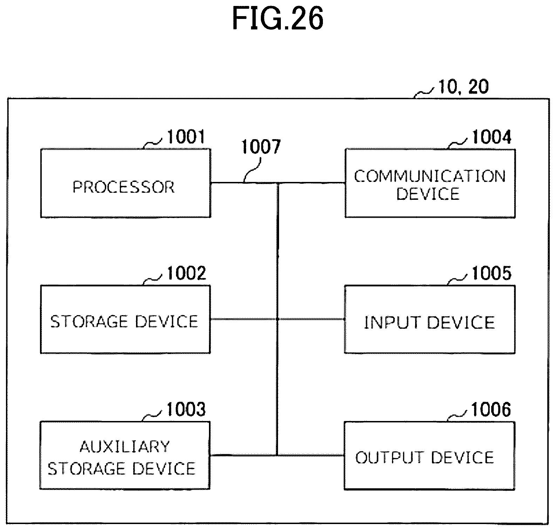

For example, the base station 10, the terminal 20, and the like according to an embodiment of the present disclosure may function as a computer that performs processing of the radio communication method according to the present disclosure. Fig. 26 is a diagram showing an example of the hardware configuration of the base station 10 and the terminal 20 according to an embodiment of the present disclosure. Each of the base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

In addition, in the following description, the term "device" can be read as a circuit, a unit, and the like. The hardware configuration of each of the base station 10 and the terminal 20 may be configured to include one or more devices for each of the devices shown in the diagram, or may be configured not to include some devices.

Each function in the base station 10 and the terminal 20 is realized by reading predetermined software (program) onto hardware, such as the processor 1001 and the storage device 1002, so that the processor 1001 performs an operation and controlling communication by the communication device 1004 or controlling at least one of reading and writing of data in the storage device 1002 and the auxiliary storage device 1003.

The processor 1001 controls the entire computer by operating an operating system, for example. The processor 1001 may be configured by a central processing unit (CPU) including an interface with peripheral equipment, a control device, an operation device, a register, and the like. For example, the control unit 140, the control unit 240, and the like described above may be realized by the processor 1001.

In addition, the processor 1001 reads a program (program code), a software module, data, and the like into the storage device 1002 from at least one of the auxiliary storage device 1003 and the communication device 1004, and executes various kinds of processing according to these. As the program, a program causing a computer to execute at least a part of the operation described in the above embodiment is used. For example, the control unit 140 of the base station 10 shown in Fig. 24 may be realized by a control program that is stored in the storage device 1002 and operated by the processor 1001. In addition, for example, the control unit 240 of the terminal 20 shown in Fig. 25 may be realized by a control program that is stored in the storage device 1002 and operated by the processor 1001. Although it has been described that the various kinds of processing described above are executed by one processor 1001, the various kinds of processing described above may be executed simultaneously or sequentially by two or more processors 1001. The processor 1001 may be implemented by one or more chips. In addition, the program may be transmitted from a network through a telecommunication line.

The storage device 1002 is a computer-readable recording medium, and may be configured by at least one of, for example, a ROM (Read Only Memory), an EPROM (Erasable Programmable ROM), an EEPROM (Electrically Erasable Programmable ROM), and a RAM (Random Access Memory). The storage device 1002 may be called a register, a cache, a main memory, and the like. The storage device 1002 can store a program (program code), a software module, and the like that can be executed to execute the communication method according to an embodiment of the present disclosure.

The auxiliary storage device 1003 is a computer-readable recording medium, and may be configured by at least one of, for example, an optical disc such as a CD-ROM (Compact Disc ROM), a hard disk drive, a flexible disk, and a magneto-optical disk (for example, a compact disk, a digital versatile disk, and a Blu-ray (Registered trademark) disk), a smart card, a flash memory (for example, a card, a stick, a key drive), a floppy (registered trademark) disk, and a magnetic strip. The storage medium described above may be, for example, a database including at least one of the storage device 1002 and the auxiliary storage device 1003, a server, or other appropriate media.

The communication device 1004 is hardware (transmitting and receiving device) for performing communication between computers through at least one of a wired network and a radio network, and is also referred to as, for example, a network device, a network controller, a network card, and a communication module. The communication device 1004 may be configured to include, for example, a high-frequency switch, a duplexer, a filter, a frequency synthesizer, and the like in order to realize at least one of frequency division duplex (FDD) and time division duplex (TDD), for example. For example, a transmitting and receiving antenna, an amplifier unit, a transmitting and receiving unit, a transmission line interface, and the like may be realized by the communication device 1004. The transmitting and receiving unit may be implemented so as to be physically or logically separated from the transmitting unit and the receiving unit.

The input device 1005 is an input device (for example, a keyboard, a mouse, a microphone, a switch, a button, and a sensor) for receiving an input from the outside. The output device 1006 is an output device (for example, a display, a speaker, and an LED lamp) that performs output to the outside. In addition, the input device 1005 and the output device 1006 may be integrated (for example, a touch panel).

In addition, respective devices, such as the processor 1001 and the storage device 1002, are connected to each other by the bus 1007 for communicating information. The bus 1007 may be configured using a single bus, or may be configured using a different bus for each device.

In addition, each of the base station 10 and the terminal 20 may be configured to include hardware, such as a microprocessor, a digital signal processor (DSP), an ASIC (Application Specific Integrated Circuit), a PLD (Programmable Logic Device), and an FPGA (Field Programmable Gate Array), and some or all of the functional blocks may be realized by the hardware. For example, the processor 1001 may be implemented using at least one of these hardware components.

### (Summary of embodiment)

As described above, according to the embodiment of the invention, there is provided a terminal including: a control unit that selects a resource, based on a timing at which another terminal can perform reception in a resource selection window in a resource pool; and a transmitting unit that transmits data to the another terminal in the selected resource. The control unit selects at least a resource for retransmission related to a HARQ (Hybrid automatic repeat request) feedback transmitted from the another terminal.

With the configuration described above, when the receiving side terminal 20 and/or the transmitting side terminal 20 performs a power saving operation, control by the HARQ feedback can be performed without hindering the power saving operation, by performing the resource selection in accordance with the resource limitation due to the power saving operation. That is, in the terminal-to-terminal direct communication, it is possible to perform an operation related to the HARQ (Hybrid automatic repeat request) suitable for the power saving operation.

The control unit may select a resource for retransmission related to the HARQ feedback in either a period that includes the timing or a period that does not included the timing. With this configuration, when the receiving side terminal 20 performs a power saving operation, it is possible to perform resource selection without being restricted by the resources limited by the power saving operation.

The control unit may configure the timing as the resource selection window. With this configuration, when the receiving side terminal 20 performs a power saving operation, it is possible to perform resource selection according to the resource limitation due to the power saving operation.

The resource selection window may be configured by the control unit, based on whether or not the resource selection is for retransmission related to the HARQ feedback. With this configuration, when the transmitting side terminal 20 performs a power saving operation, it is possible to perform resource selection according to the resource limitation due to the power saving operation.

The resource selection window may be configured by the control unit, based on whether or not a resource selection for retransmission related to the HARQ feedback is successful. With this configuration, when the transmitting side terminal 20 performs a power saving operation, it is possible to perform resource selection according to the resource limitation due to the power saving operation.

In addition, according to the embodiment of the invention, there is provided a communication method in which a terminal executes: selecting a resource, based on a timing at which another terminal can perform reception in a resource selection window in a resource pool; and transmitting data to the another terminal in the selected resource. The selecting includes selecting at least a resource for retransmission related to a HARQ (Hybrid automatic repeat request) feedback transmitted from the another terminal.

With the configuration described above, when the receiving side terminal 20 and/or the transmitting side terminal 20 performs a power saving operation, control by the HARQ feedback can be performed without hindering the power saving operation, by performing the resource selection in accordance with the resource limitation due to the power saving operation. That is, in the terminal-to-terminal direct communication, it is possible to perform an operation related to the HARQ (Hybrid automatic repeat request) suitable for the power saving operation.

### (Supplement to embodiments)

While the embodiments of the invention have been described above, the disclosed invention is not limited to such embodiments, and those skilled in the art will understand various variations, modifications, alternatives, substitutions, and the like. Although the description has been made using specific numerical examples to facilitate the understanding of the invention, those numerical values are merely examples and any appropriate values may be used unless otherwise specified. The division of the items in the above description is not essential to the invention, and the matters described in two or more items may be used in combination as necessary, or the matter described in a given item may be applied to the matter described in another item (unless there is a contradiction). The boundaries between functional units or processing units in the functional block diagrams do not always correspond to the boundaries between physical components. The operation of a plurality of functional units may be physically performed by one component, or the operation of one functional unit may be physically performed by a plurality of components. In the processing procedure described in the embodiment, the order of the processing may be changed as long as there is no contradiction. Although the base station 10 and the terminal 20 have been described using functional block diagrams for the sake of convenience of description of the processing, such equipment may be realized by hardware, software, or a combination thereof. The software operated by the processor of the base station 10 according to the embodiment of the invention and the software operated by the processor of the terminal 20 according to the embodiment of the invention may be stored in a random access memory (RAM), a flash memory, a read only memory (ROM), an EPROM, an EEPROM, a register, a hard disk (HDD), a removable disk, a CD-ROM, a database, a server, or any other appropriate storage media.

In addition, the notification of information is not limited to the aspect/embodiment described in the present disclosure, and may be performed using other methods. For example, the notification of information may be performed using physical layer signaling (for example, DCI (Downlink Control Information), UCI (Uplink Control Information)), higher layer signaling (for example, RRC (Radio Resource Control) signaling, MAC (Medium Access Control) signaling, broadcast information (MIB (Master Information Block), SIB (System Information Block)), other signals, or a combination thereof. In addition, the RRC signaling may be called an RRC message, and may be, for example, an RRC connection setup message or an RRC connection reconfiguration message.

Each aspect/embodiment described in the present disclosure may be applied to at least one of systems, which use LTE (Long Term Evolution), LTE-A (LTE-Advanced), SUPER 3G, IMT-Advanced, 4G (4th generation mobile communication system), 5G (5th generation mobile communication system), FRA (Future Radio Access), and NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and next-generation systems extended based on these. In addition, a plurality of systems may be combined (for example, a combination of 5G and at least one of LTE and LTE-A) to be applied.

In the processing procedure, sequence, flowchart, and the like in each aspect/embodiment described in this specification, the order may be changed as long as there is no contradiction. For example, for the methods described in the present disclosure, elements of various steps are presented using an exemplary order, and the invention is not limited to the specific order presented.

The specific operation described as being performed by the base station 10 in this specification may be performed by its upper node in some cases. In a network including one or more network nodes each having the base station 10, it is obvious that various operations performed for communication with the terminal 20 can be performed by at least one of the base station 10 and other network nodes (for example, MME, S-GW, and the like can be considered, but the network node is not limited thereto) other than the base station 10. Although the case where the number of other network nodes other than the base station 10 is one has been exemplified above, the other network nodes may be a combination (for example, MME and S-GW) of a plurality of other network nodes.

Information or signals described in the present disclosure can be output from a higher layer (or a lower layer) to a lower layer (or a higher layer). Information or signals described in the present disclosure may be input and output through a plurality of network nodes.

Information or the like that is input and output may be stored in a specific place (for example, a memory) or may be managed using a management table. The information or the like that is input and output can be overwritten, updated, or added. The information or the like that is output may be deleted. The information or the like that is input may be transmitted to another device.

The judging in the present disclosure may be performed based on a value expressed by 1 bit (0 or 1), may be performed based on Boolean (true or false), or may be performed by numerical value comparison (for example, comparison with a given value).

Software, regardless of whether this is called software, firmware, middleware, microcode, a hardware description language, or any other name, should be interpreted broadly to mean instructions, instruction sets, codes, code segments, program codes, programs, subprograms, software modules, applications, software applications, software packages, routines, subroutines, objects, executable files, execution threads, procedures, functions, and the like.

In addition, software, instructions, information, and the like may be transmitted and received through a transmission medium. For example, in a case where software is transmitted from a website, a server, or other remote sources using at least one of the wired technology (coaxial cable, optical fiber cable, twisted pair, digital subscriber line (DSL), and the like) and the wireless technology (infrared, microwave, and the like), at least one of the wired technology and the wireless technology is included within the definition of the transmission medium.

The information, signals, and the like described in the present disclosure may be expressed using any of a variety of different technologies. For example, data, instructions, commands, information, signals, bits, symbols, and chips that can be referred to throughout the above description may be represented by voltage, current, electromagnetic waves, magnetic field or magnetic particles, light field or photon, or any combination thereof.

In addition, the terms described in the present disclosure and the terms necessary for understanding the present disclosure may be replaced with terms having the same or similar meaning. For example, at least one of the channel and the symbol may be a signal (signaling). In addition, the signal may be a message. In addition, a component carrier (CC) may be called a carrier frequency, a cell, a frequency carrier, or the like.

The terms "system" and "network" used in the present disclosure are used interchangeably.

In addition, the information, parameters, and the like described in the present disclosure may be expressed using an absolute value, may be expressed using a relative value from a predetermined value, or may be expressed using another corresponding information. For example, the radio resource may be indicated by an index.

The names used for the parameters described above are not limiting names in any way. In addition, equations and the like using these parameters may be different from those explicitly disclosed in the present disclosure. Since various channels (for example, a PUCCH and a PDCCH) and information elements can be identified by any suitable names, various names allocated to these various channels and information elements are not limiting names in any way.

In the present disclosure, terms such as "base station (BS)", "radio base station", "base station", "fixed station", "NodeB", "eNodeB (eNB)", "gNodeB (gNB)","access point", "transmission point", "reception point", "transmission/reception point", "cell", "sector", "cell group", "carrier", and "component carrier" can be used interchangeably. The base station may also be referred to as terms, such as a macro cell, a small cell, a femto cell, and a pico cell.

The base station can include one or more (for example, three) cells. When the base station includes a plurality of cells, the entire coverage area of the base station can be divided into a plurality of smaller areas, and each of the smaller area can also provide a communication service using a base station subsystem (for example, a remote radio head (RRH)). The term "cell" or "sector" refers to a part or the entirety of the coverage area of at least one of a base station and a base station subsystem that provides communication services in this coverage.

In the present disclosure, the terms such as "mobile station (MS)", "user terminal", "user equipment (UE)", and "terminal" can be used interchangeably.

The mobile station may also be called a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or some other appropriate terms depending on those skilled in the art.

At least one of the base station and the mobile station may be called a transmitting device, a receiving device, a communication device, and the like. In addition, at least one of the base station and the mobile station may be a device mounted on a moving body, the moving body itself, and the like. The moving body may be a vehicle (for example, a car or an airplane), an unmanned moving body (for example, a drone or a self-driving car), or a robot (maned or unmanned). In addition, at least one of the base station and the mobile station necessarily includes a device that does not move during a communication operation. For example, at least one of the base station and the mobile station may be an IoT (Internet of Things) device, such as a sensor.

In addition, the base station in the present disclosure may be read as a user terminal. For example, each aspect/embodiment of the present disclosure may be applied to a configuration in which communication between a base station and a user terminal is replaced with communication between a plurality of terminals 20 (which may be called, for example, D2D (Device-to-Device) or V2X (Vehicle-to-Everything)). In this case, the terminal 20 may have the above-described function of the base station 10. In addition, terms such as "uplink" and "downlink" may be read as terms corresponding to terminal-to-terminal communication (for example, "side"). For example, an uplink channel, a downlink channel, and the like may be read as a side channel.

Similarly, the user terminal in the present disclosure may be read as a base station. In this case, the base station may have the above-described function of the user terminal.

The terms "determining" used in the present disclosure may involve a wide variety of operations. For example, "determining" can include considering judging, calculating, computing, processing, deriving, investigating, looking up (search, inquiry) (for example, looking up in a table, database, or another data structure), and ascertaining as "determining". In addition, "determining" can include considering receiving (for example, receiving information), transmitting (for example, transmitting information), input, output, accessing (for example, accessing data in a memory) as "determining". In addition, "determining" can include considering resolving, selecting, choosing, establishing, comparing, and the like as "determining". In other words, "determining" can include considering any operation as "determining". In addition, "determining" may be read as "assuming", "expecting", "considering", and the like.

The terms "connected" and "coupled" or variations thereof mean any direct or indirect connection or coupling between two or more elements, and can include a case where one or more intermediate elements are present between two elements "connected" or "coupled" to each other. The coupling or connection between elements may be physical, logical, or a combination thereof. For example, "connection" may be read as "access". When used in the present disclosure, two elements can be considered to be "connected" or "coupled" to each other using at least one of one or more wires, cables, and printed electrical connections and using some non-limiting and non-inclusive examples, such as electromagnetic energy having wavelengths in a radio frequency domain, a microwave domain, and a light (both visible and invisible) domain.

The reference signal may be abbreviated as RS (Reference Signal), and may be called Pilot according to the applied standard.

The description "based on" used in the present disclosure does not mean "based only on" unless otherwise specified. In other words, the description "based on" means both "based only on" and "based at least on".

Any reference to elements using designations such as "first" and "second" used in the present disclosure does not generally limit the quantity or order of the elements. These designations can be used in the present disclosure as a convenient method for distinguishing between two or more elements. Therefore, references to first and second elements do not mean that only two elements can be adopted or that the first element should precede the second element in any way.

"Means" in the configuration of each device described above may be replaced with "unit", "circuit", "device", and the like.

When "include", "including", and variations thereof are used in the present disclosure, these terms are intended to be inclusive similarly to the term "comprising". In addition, the term "or" used in the present disclosure is intended not to be an exclusive-OR.

A radio frame may be configured by one or more frames in the time domain. Each of one or more frames in the time domain may be referred to as a subframe. In addition, the subframe may be configured by one or more slots in the time domain. The subframe may be a fixed time length (for example, 1 ms) that does not depend on numerology.

Numerology may be a communication parameter applied to at least one of transmission and reception of a given signal or channel. Numerology may indicate at least one of, for example, subcarrier spacing (SCS), bandwidth, symbol length, cyclic prefix length, transmission time interval (TTI), the number of symbols per TTI, radio frame configuration, specific filtering processing performed in the frequency domain by the transceiver, and specific windowing processing performed in the time domain by the transceiver.

A slot may be configured by one or more symbols (OFDM (Orthogonal Frequency Division Multiplexing) symbol, SC-FDMA (Single Carrier Frequency Division Multiple Access) symbol, and the like) in the time domain. A slot may be a time unit based on numerology.

A slot may include multiple mini-slots. Each mini-slot may be configured by one or more symbols in the time domain. In addition, the mini-slot may be called a subslot. A mini-slot may be configured by a smaller number of symbols than that in a slot. A PDSCH (or a PUSCH) transmitted in time units larger than the mini-slot may be referred to as PDSCH (or PUSCH) mapping type A. A PDSCH (or a PUSCH) transmitted using a mini-slot may be referred to as PDSCH (or PUSCH) mapping type B.

Each of the radio frame, the subframe, the slot, the mini-slot, and the symbol indicates a time unit when transmitting a signal. The radio frame, the subframe, the slot, the mini-slot, and the symbol may have different names corresponding thereto.

For example, one subframe may be called a transmission time interval (TTI), a plurality of consecutive subframes may be called a TTI, and one slot or one mini-slot may be called a TTI. That is, at least one of the subframe and the TTI may be a subframe (1 ms) in the known LTE, a period (for example, 1 to 13 symbols) shorter than 1 ms, or a period longer than 1 ms. In addition, the unit indicating the TTI may be called a slot, a mini-slot, or the like, instead of a subframe.

Here, the TTI refers to, for example, a minimum time unit of scheduling in radio communication. For example, in the LTE system, the base station performs scheduling for allocating radio resources (frequency bandwidth, transmission power, and the like that can be used in each terminal 20) to each terminal 20 in TTI units. In addition, the definition of the TTI is not limited to this.

The TTI may be a transmission time unit, such as a channel-encoded data packet (transport block), a code block, and a code word, or may be a processing unit, such as scheduling and link adaptation. In addition, when a TTI is given, a time section (for example, the number of symbols) in which a transport block, a code block, a code word, and the like are actually mapped may be shorter than the TTI.

In addition, when one slot or one mini-slot is called a TTI, one or more TTIs (that is, one or more slots or one or more mini-slots) may be a minimum time unit for scheduling. In addition, the number of slots (the number of mini-slots) configuring the minimum time unit of the scheduling may be controlled.

A TTI having a time length of 1 ms may be called a normal TTI (TTI in LTE Rel. 8-12), a long TTI, a normal subframe, a long subframe, a slot, and the like. A TTI shorter than the normal TTI may be called a short TTI, a partial or fractional TTI, a short subframe, a mini-slot, a subslot, a slot, and the like.

In addition, a long TTI (for example, a normal TTI or a subframe) may be read as a TTI having a time length exceeding 1 ms, and a short TTI may be read as a TTI shorter than the TTI length of the long TTI and equal to or longer than 1 ms.

A resource block (RB) is a resource allocation unit in the time domain and the frequency domain, and may include one or more consecutive subcarriers in the frequency domain. The number of subcarriers included in the RB may be the same regardless of numerology, and may be, for example, 12. The number of subcarriers included in the RB may be determined based on numerology.

In addition, the time domain of the RB may include one or more symbols, and may be the length of one slot, one mini-slot, one subframe, or one TTI. One TTI, one subframe, and the like may each be configured by one or more resource blocks.

In addition, one or more RBs may be called a physical resource block (PRB: Physical RB), a sub-carrier group (SCG), a resource element group (REG), a PRB pair, an RB pair, and the like.

In addition, the resource block may be configured by one or more resource elements (REs). For example, one RE may be a radio resource area of one subcarrier and one symbol.

A bandwidth part (BWP) (which may be called a partial bandwidth or the like) may indicate a subset of consecutive common resource blocks (RBs) for given numerology in a given carrier. Here, the common RB may be specified by an index of the RB with the common reference point of the carrier as a reference. The PRB may be defined by a given BWP and numbered within the BWP.

The BWP may include a BWP for UL (UL BWP) and a BWP for DL (DL BWP). For the terminal 20, one or more BWPs may be set in one carrier.

At least one of the set BWPs may be active, and it may not be assumed that the terminal 20 transmits and receives a predetermined signal/channel outside the active BWP. In addition, "cell", "carrier", and the like in the present disclosure may be read as "BWP".

The structures of the radio frame, the subframe, the slot, the mini-slot, and the symbol described above are merely examples. For example, the number of subframes included in a radio frame, the number of slots per subframe or radio frame, the number of mini-slots included in a slot, the number of symbols and RBs included in a slot or mini-slot, the number of subcarriers included in an RB, the number of symbols in the TTI, the symbol length, the cyclic prefix (CP) length, and the like can be changed in various ways.

In the present disclosure, in a case where articles, for example, a, an, and the in English, are added by translation, the present disclosure may include that nouns subsequent to these articles are plural.

In the present disclosure, the expression "A and B are different" may mean "A and B are different from each other". In addition, the expression may mean that "A and B each are different from C". Terms such as "separate", "coupled" may be interpreted similarly to "different".

Each aspect/embodiment described in the present disclosure may be used alone, may be used in combination, or may be switched and used according to execution. In addition, the notification of predetermined information (for example, notification of "X") is not limited to being explicitly performed, and may be performed implicitly (for example, without the notification of the predetermined information).

In addition, in the present disclosure, PSCCH/PSSCH is an example of data.

While the present disclosure has been described in detail, it is apparent to those skilled in the art that the present disclosure is not limited to the embodiments described in the present disclosure. The present disclosure can be implemented as modified and changed aspects without departing from the spirit and scope of the present disclosure defined by the description of the claims. Therefore, the description of the present disclosure is intended for illustrative purposes, and has no restrictive meaning to the present disclosure.

### EXPLANATIONS OF LETTERS OR NUMERALS

- 10: BASE STATION
- 110: TRANSMITTING UNIT
- 120: RECEIVING UNIT
- 130: SETTING UNIT
- 140: CONTROL UNIT
- 20: TERMINAL
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A terminal, comprising:
a control unit that selects a resource, based on a timing at which another terminal can perform reception in a resource selection window in a resource pool; and
a transmitting unit that transmits data to the another terminal in the selected resource,
wherein the control unit selects at least a resource for retransmission related to a HARQ (Hybrid automatic repeat request) feedback transmitted from the another terminal.

2. The terminal according to claim 1,
wherein the control unit selects the resource for retransmission related to the HARQ feedback in either a period that includes the timing or a period that does not include the timing.

3. The terminal according to claim 1,
wherein the control unit configures the timing as the resource selection window.

4. The terminal according to claim 1,
wherein the resource selection window is configured by the control unit, based on whether or not the resource selection is for retransmission related to the HARQ feedback.

5. The terminal according to claim 1,
wherein the resource selection window is configured by the control unit, based on whether or not a resource selection for retransmission related to the HARQ feedback is successful.

6. A communication method in which a terminal executes:
selecting a resource, based on a timing at which another terminal can perform reception in a resource selection window in a resource pool; and
transmitting data to the another terminal in the selected resource,
wherein the selecting includes selecting at least a resource for retransmission related to a HARQ (Hybrid automatic repeat request) feedback transmitted from the another terminal.
